# EUROPEAN PATENT SPECIFICATION

(11) **EP 2 602 703 B1**
(45) Date of publication and mention of the grant of the patent: **07.02.2018**
(21) Application number: 12008203.7
(22) Date of filing: 07.12.2012
(51) Int. Cl.: G06F 3/0488, G06F 3/0481, G02B 27/22

(54) **Mobile terminal and controlling method thereof**
Mobiles Endgerät und Steuerungsverfahren dafür
Terminal mobile et son procédé de contrôle

(30) Priority: 09.12.2011 KR 20110131734; 09.12.2011 KR 20110131735
(43) Date of publication of application: 12.06.2013
(73) Proprietor: LG Electronics Inc., Seoul 07336 (KR)
(72) Inventor: Jeon, Seongyeom, 153-801 Seoul (KR); Lee, Jehak, 153-801 Seoul (KR); Ryu, Kyunghoo, 153-801 Seoul (KR)
(74) Representative: Ter Meer Steinmeister & Partner

(56) References cited:
- WO-A2-2006/003590
- US-A1- 2010 199 221
- US-A1- 2011 093 778

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for providing a visual effect in accordance with a shift of a pointer in a mobile terminal capable of displaying a stereoscopic 3D image and controlling functions of the mobile terminal.

### Discussion of the Related Art

Recently, the demand for a display device for creating and appreciating a 3D stereoscopic image more comfortably in consideration of appreciation environment is rising. Especially, the demand for a display device of a terminal type is increasingly rising. Generally, terminals can be classified into mobile/portable terminals and stationary terminals. The mobile terminals can be further classified into handheld terminals and vehicle mount terminals according to possibility of user's direct portability.

As functions of the terminal are getting diversified, the terminal tends to be implemented as a multimedia player provided with composite functions such as photographing of photos or videos, playback of music or video files, game play, broadcast reception and the like for example.

To support and diversify the terminal functions, it may be able to consider improving structural parts and/or software parts of the terminal.

As a stereoscopic 3D image via binocular disparity is implemented on a display unit of a mobile terminal, the user's demand for an interface corresponding to the implementation of the stereoscopic 3D image is rising to meet the user's satisfaction. Yet, when a user intends to select an object (e.g., an icon, etc.) configured with a stereoscopic 3D image, the user may see his hand as if the hand is separate from the stereoscopic 3D image, it may be difficult for the user to intuitively recognize whether the user can accurately select the object desired by the user.

Moreover, due to the limitations put on a display unit size and a menu configuration, a general page-by-page shift (e.g., a considerable part of a content is replaced except a user interface arranged stationarily) occurs in accordance with a menu selection or the like. In this case, the following problems may be caused. First of all, 1) loading happens frequently, 2) a flow is interrupted, 3) a separate graphic user interface of a page sheet needs to be displayed on a display unit, and 4) multitasking is not facilitated. Thus, the demand for an efficient interface capable of using a stereoscopic 3D image output is rising.

US 2011/093778 A1 discloses a mobile terminal that comprises a display configured to display at least one selection object having a perceived three-dimensional depth, a detecting unit configured to detect a distance of a pointer from the mobile terminal and to detect a position of the pointer relative to the mobile terminal; and a controller 180. Further, the controller is configured to control a prescribed visual effect to be displayed on the display based on the detected distance and the detected position of the pointer, and when the distance of the pointer is determined to be equal to or less than a first threshold and the detected position of the pointer corresponds to a specific selection object, activate a function corresponding to the specific selection object.

US 2010/0199221 A1 is concerned with navigation of a virtual plane using depth and discloses in particular a touchless Human Computer Interface (HCI) which provides a virtual surface in three-dimensional space. As described in this document a user may interact with a computer in a touchless manner through movement and gesture in three dimensions. To input a certain command according to a certain movement or gesture a camera is used to take a picture or a series of pictures of the movement performed by a user in the three-dimensional space. A data plane is used to display data in a display configuration as controlled by actions as interpreted human gestures. In particular, to provide a feedback to the user it is possible to display a cursor the shape of which may differ in accordance with the distance of a user's hand from the virtual surface. Further, several movements of a hand, i.e. several gestures are described which are interpreted as specific actions, and several views of the data plane are shown to describe certain visual effects on the display.

WO 2006/003590 A2 is concerned with a method and device for preventing staining of a display device, and discloses 3D display capable of detecting a horizontal and vertical position of a pointer with respect to the surface of the display as well as the distance of the pointer from the surface of the display. In particular a cursor is generated on the display screen having the form of a cursor having a shadow. The shadow gets closer to the cursor and overlap with the cursor when the user's finger nears the display screen.

### SUMMARY OF THE INVENTION

The object of the present invention is to provide a mobile terminal and a method of controlling the same by which an action of a user/pointer can be visually set back on outputting a stereoscopic 3D image such that the mobile terminal can be controlled more intuitively and conveniently.

This object is achieved by the mobile terminal according to claim 1 and the controlling method according to claim 10.

Examples in the context of the application are given below. A mobile terminal includes a display unit including a binocular disparity generating means, the display unit displaying at least one selection target object having a predetermined 3D depth given thereto, a detecting unit configured to detect a distance and position of a pointer from the mobile terminal, and a controller controlling a prescribed visual effect to be displayed on the display unit in response to the detected distance and position of the pointer, the controller, if the distance of the pointer is equal to or smaller than a 1^{st} threshold and a specific selection target object is present at the position, controlling a function corresponding to the specific selection target object to be activated.

A method of controlling a mobile terminal the steps of displaying at least one selection target object having a predetermined 3D depth given thereto on a display unit including a binocular disparity generating means, detecting a distance and position of a pointer from the mobile terminal via a detecting unit, controlling a prescribed visual effect to be displayed on the display unit in response to the detected distance and position of the pointer, and if the distance of the pointer is equal to or smaller than a 1^{st} threshold and a specific selection target object is present at the position, activating a function corresponding to the specific selection target object.

Another mobile terminal includes a touchscreen including a binocular disparity generating means, the touchscreen configured to display a user interface including a plurality of layers respectively having different 3D depths, a detecting unit configured to detect a distance and position of a pointer from the mobile terminal; and a controller determining and activating a layer corresponding to the detected distance among a plurality of the layers, the controller performing a function corresponding to at least one of the position of the pointer and a touch pattern of the pointer in the activated layer.

The controller may give a prescribed transparency to a plurality of the layers except the activated layer.

The distance may include a vertical distance between the pointer and the mobile terminal and the position may include coordinates in a plane in parallel with the display unit.

A plurality of the layers may include at least one of a plus layer having a positive 3D depth, a zero layer having a zero 3D depth and a minus layer having a negative 3D depth.

The detecting unit may include a camera configured to photograph an image including the pointer, at least one proximity sensor configured to measure the distance from the pointer, and a touchpad provided to a backside of a face provided with the touchscreen.

When a touch input to the touchpad is detected, the controller may activate the minus layer.

When a pressure applied onto the touchscreen is recognized, if the pressure over a predetermined level is applied to the touchscreen, the controller may activate the minus layer.

A 1^{st} page of a 1^{st} application may be displayed on a 1^{st} layer among a plurality of the layers and a 2^{nd} page of the 1^{st} application may be displayed on a 2^{nd} layer among a plurality of the layers.

A 1^{st} application may be displayed on a 1^{st} layer among a plurality of the layers and a 2^{nd} application may be displayed on a 2^{nd} layer among a plurality of the layers.

A 1^{st} function region of a 1^{st} application including a plurality of function regions may be displayed on a 1^{st} layer among a plurality of the layers and a function region except the 1^{st} function region may be displayed on a 2^{nd} layer among a plurality of the layers.

A list of a plurality of applications may be displayed on a 1^{st} layer among a plurality of the layers and at least one of a shortcut icon, widget and update history of a 1^{st} application selected from the list of a plurality of the applications may be displayed on a 2^{nd} layer among a plurality of the layers.

The controller may control a prescribed visual effect to be displayed on the activated layer in response to the detected position and distance of the pointer.

The prescribed visual effect may include an effect of a shadow displayed at a prescribed 3D depth of the activated layer on an extension of a straight line formed by connecting a virtual light source situated at a prescribed point in a 3D space, the pointer and the touchscreen together.

A further method of controlling a mobile terminal includes the steps of displaying a user interface including a plurality of layers respectively having different 3D depths on a touchscreen including a binocular disparity generating means, detecting a distance and position of a pointer from the mobile terminal using a detecting unit, determining and activating a layer corresponding to the detected distance among a plurality of the layers, and performing a function corresponding to at least one of the position of the pointer and a touch pattern of the pointer in the activated layer.

The distance may include a vertical distance between the pointer and the mobile terminal, the position may include coordinates in a plane in parallel with the display unit, and the activating step may include the step of giving a prescribed transparency to a plurality of the layers except the activated layer.

A plurality of the layers may include at least one of a plus layer having a positive 3D depth, a zero layer having a zero 3D depth and a minus layer having a negative 3D depth.

Accordingly, the present invention provides the following effects and/or features.

First of all, a user may be able to appreciate a stereoscopic 3D image more conveniently.

Secondly, a user may be able to receive a visual feedback of a position of a pointer in a manner of linking the pointer of his own and a virtual visual effect to each other.

Thirdly, the present invention reduces page loading and enables a free page switching or turning, using a multi-layer user interface.

Fourthly, the present invention enables more convenient multitasking and expands a content displayed region, using a multi-layer user interface.

Effects obtainable from the present invention may be non-limited by the above mentioned effect. And, other unmentioned effects can be clearly understood from the following description by those having ordinary skill in the technical field to which the present invention pertains. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to one embodiment of the present invention;
FIG. 2A is a front perspective diagram of a mobile terminal according to one embodiment of the present invention;
FIG. 2B is a rear perspective diagram of a mobile terminal according to one embodiment of the present invention to describe one operating status thereof;
FIG. 3 is a diagram for describing the principle of binocular disparity;
FIG. 4 is a diagram for the concept of a sense of distance and 3D depth attributed to binocular disparity;
FIG. 5 is a diagram for describing the principle of a stereoscopic 3D image displaying method using binocular disparity (or parallax barrier), which is applicable to embodiments of the present invention;
FIG. 6 is a flowchart for one example of an operating process of a mobile terminal to activate a user interface according to one embodiment of the present invention;
FIG. 7A is a diagram for one example of a joint recognizing method for detecting a pointer position, which is applicable to embodiments of the present invention;
FIG. 7B is a diagram for one example of a distance recognizing method for detecting a pointer position, which is applicable to embodiments of the present invention;
FIG. 8 is a diagram for describing the concept of a shadow effect according to one embodiment of the present invention;
FIG. 9A is a diagram for one example of a shadow effect displayed on a selection target object implemented as a stereoscopic 3D image on a mobile terminal according to one embodiment of the present invention;
FIG. 9B is a diagram for one example of a shadow effect when a selection target object is implemented as a 2D image on a mobile terminal according to one embodiment of the present invention;
FIG. 10 is a diagram for one example of a visual effect given to a selection target object implemented as a stereoscopic 3D image on a mobile terminal according to one embodiment of the present invention in accordance with a position of a pointer;
FIG. 11 is a diagram for one example of displaying a visual effect in accordance with an arranged formation of a selection target object according to one embodiment of the present invention;
FIG. 12 is a diagram for one example of changing a shape of a cursor depending on a distance between a selection target object and a pointer according to one embodiment of the present invention;
FIG. 13 is a diagram for one example of changing an arrangement formation of a selection target object depending on a distance between the selection target object and a pointer according to one embodiment of the present invention;
FIG. 14 is a diagram for one example of changing an arrangement formation of a selection target object depending on a distance between the selection target object and a pointer according to one embodiment of the present invention;
FIG. 15 is a flowchart for one example of an operating process of a mobile terminal to activate a user interface according to another embodiment of the present invention;
FIG. 16A is a diagram for one example of a multi-layer user interface configuration including 3 layers according to another embodiment of the present invention;
FIG. 16B is a diagram for one example of a layer selecting/activating method in a multi-layer user interface according to another embodiment of the present invention;
FIG. 17A is a diagram to describe a messenger page structure according to another embodiment of the present invention;
FIG. 17B is a diagram of display configuration for one example of an active messenger state to which a multi-layer user interface according to another embodiment of the present invention is applied;
FIG. 17C is a diagram of display configuration for another example of an active messenger state to which a multi-layer user interface according to another embodiment of the present invention is applied;
FIG. 18 is a diagram for one example of a widget activating method according to another embodiment of the present invention;
FIG. 19A and FIG. 19B are diagrams for examples of a method for activating a setting menu having 3-step menu depths according to another embodiment of the present invention;
FIG. 20 is a diagram for one example of performing a multi-tasking via a multi-layer user interface according to another embodiment of the present invention; and
FIG. 21 is a diagram for one example of a sub-menu separating method according to another embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are often used for elements in order to facilitate discussion of the disclosure. Therefore, significant meanings or roles are not given to the suffixes themselves and it is understood that the 'module', 'unit' and 'part' can be used together or interchangeably.

In the following detailed description, it is assumed that an image display device is a terminal. Various types of terminals may be implemented using the various techniques discussed herein. Examples of such terminals include mobile as well as stationary terminals, such as mobile phones, user equipment, smart phones, DTV, computers, digital broadcast terminals, personal digital assistants, portable multimedia players (PMPs), navigators, and the like. By way of non-limiting example only, further description will be with regard to a mobile terminal 100, and such teachings may apply equally to other types of terminals.

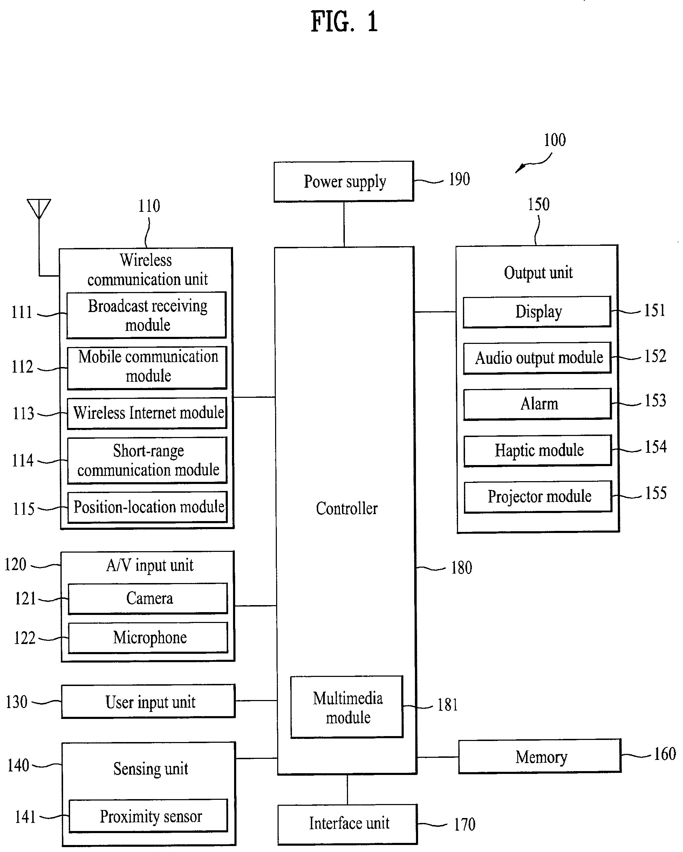

FIG. 1 is a block diagram of a mobile terminal 100 in accordance with an embodiment of the present invention. FIG. 1 shows the mobile terminal 100 having a wireless communication unit 110, an A/V (audio/video) input unit 120, a user input unit 130, a sensing unit 140, an output unit 150, a memory 160, an interface unit 170, a controller 180, a power supply unit 190, among other components. Mobile terminal 100 is shown having various components, but it is understood that implementing all of the illustrated components is not a requirement as greater or fewer components may alternatively be implemented.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115, and the like.

The broadcast receiving module 111 receives a broadcast signal and/or broadcast associated information from an external broadcast managing server via a broadcast channel. The broadcast channel may include a satellite channel and a terrestrial channel. The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. This broadcast associated information can also be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By non-limiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured to be suitable for other broadcasting systems as well as the above-identified digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceiving, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), LTE (Long Term Evolution) and the like.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring still to FIG. 1, the audio/video (A/V) input unit 120 is shown configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Typically, the processed image frames can be displayed on the display 151.

The image frames processed by the camera 121 can be stored in the memory 160 or can be externally transmitted via the wireless communication unit 110. Optionally, two or more cameras 121 can be provided to the mobile terminal 100 according to the environment in which the terminal used to according to user needs.

The microphone 122 receives an external audio signal while the portable device is in a particular mode, such as phone call mode, recording mode and voice recognition mode. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, and the like.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. If desired, the sensing unit 140 can include a proximity sensor 141.

The output unit 150 generates outputs relevant to the senses of sight, hearing, touch and the like. In some cases, the output unit 150 includes the display 151, an audio output module 152, an alarm unit 153, a haptic module 154, a projector module 155, and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmissive type, which can be named a transparent display. As a representative example for the transparent display, there is TOLED (transparent OLED) or the like. A rear configuration of the display 151 can be implemented in the optical transmissive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In the case where the display 151 and a sensor for detecting a touch action (hereinafter also referred to a 'touch sensor') configures a mutual layer structure (hereinafter also referred to a 'touchscreen'), the user can use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

With continued reference to FIG. 1, a proximity sensor (not shown in the drawing) can be provided to an internal area of the mobile terminal 100 enclosed by the touchscreen or proximate to the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one or more of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor, and the like. When the touchscreen includes the electrostatic capacity proximity sensor, it may also be configured to detect the proximity of a pointer using a variation of electric field according to the proximity of the pointer. In this scenario, the touchscreen (touch sensor) can be classified as a proximity sensor.

In the following description, for clarity, an action that a pointer approaches without contacting with the touchscreen to be recognized as located on the touchscreen is referred to as 'proximity touch' while an action that a pointer actually touches the touchscreen may be referred to as a 'contact touch'. The meaning of the position on the touchscreen proximity-touched by the pointer refers to the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). In addition, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display 151, on an external screen or wall according to a control signal of the controller 180.

In particular, the projector module 155 can include a light source (not shown in the drawing) generating light (e.g., laser) for projecting an image externally, an image producing element (not shown in the drawing) for producing an image to output externally using the light generated from the light source, and a lens (not shown in the drawing) for enlarging the image for output externally at predetermined focus distance. The projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. It is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on the Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identity Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such feature may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

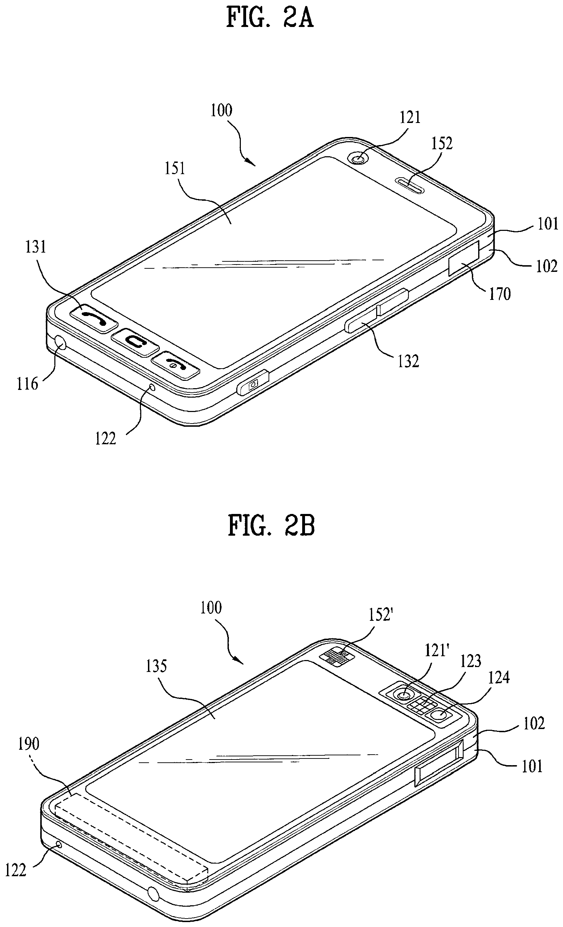

FIG. 2A is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

FIG. 2B is a perspective diagram of a backside of the terminal shown in FIG. 2A.

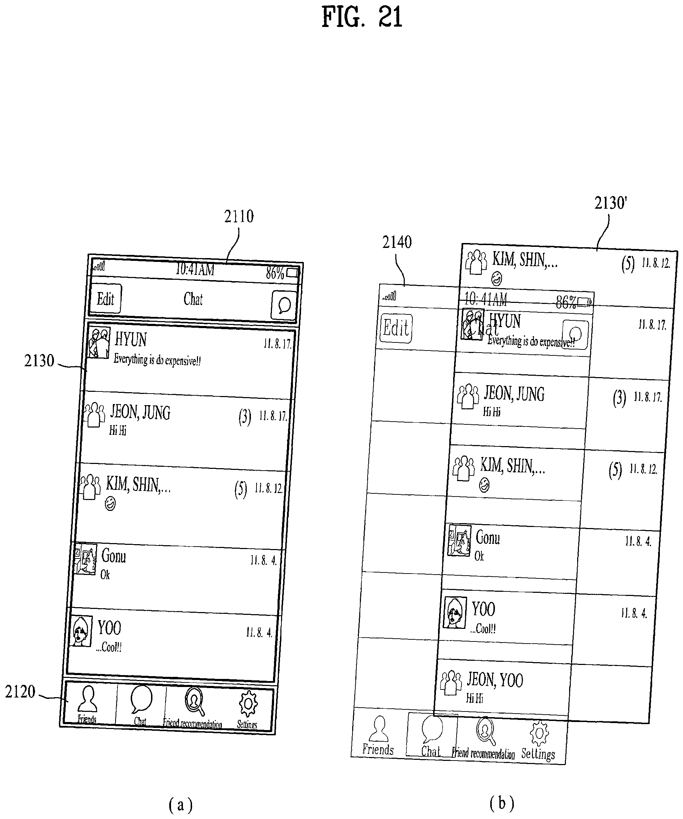

Referring to FIG. 2B, a camera 121' can be additionally provided to a backside of the terminal body, and more particularly, to the rear case 102. The camera 121 has a photographing direction that is substantially opposite to that of the former camera 121 shown in FIG. 21A and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display 151. In this case, if the display 151 is configured to output visual information from its both faces, it is able to recognize the visual information via the touchpad 135 as well. The information outputted from both of the faces can be entirely controlled by the touchpad 135. Alternatively, a display is further provided to the touchpad 135 so that a touchscreen can be provided to the rear case 102 as well.

The touchpad 135 is activated by interconnecting with the display 151 of the front case 101. The touchpad 135 can be provided in rear of the display 151 in parallel. The touchpad 135 can have a size equal to or smaller than that of the display 151.

### Implementation of Stereoscopic 3D images

In the following description, a method of displaying a 3D image in a mobile terminal applicable to embodiments of the present invention and a display unit configuration for the same are explained.

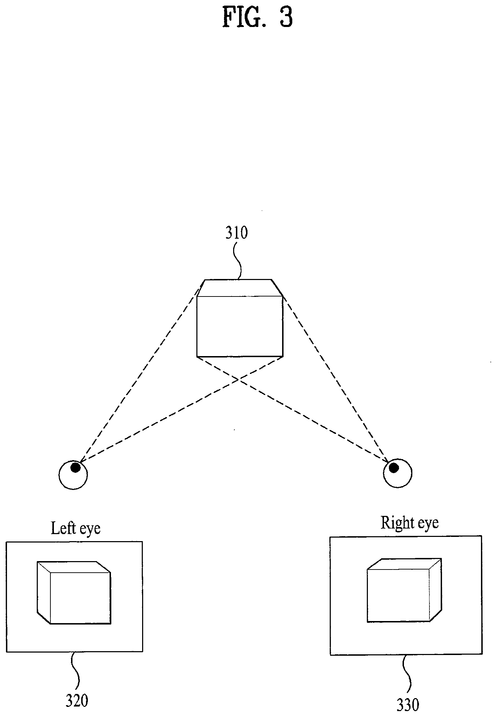

One of schemes for implementing a 3D image is a stereoscopic scheme of providing different image to both eyes, respectively, which uses the principle that a user can sense a stereoscopic effect in looking at an object with human eyes. In particular, human eyes are configured to see different planar images in looking at the same object due to a distance between both eyes. These different images are forwarded to a human brain via retinas. The human brain is able to sense depth and reality of a 3D image by combining the different images together. Therefore, the binocular disparity attributed to the distance between both of the eyes enables the user to sense the stereoscopic effect despite that there is an individual difference of the binocular disparity more or less. Therefore, the binocular disparity becomes the most important factor of the second category. The binocular disparity is explained in detail with reference to FIG. 3 as follows.

FIG. 3 is a diagram for explaining the principle of binocular disparity.

Referring to FIG. 3, assume a situation that a hexahedron 310 is positioned as a subject in front below an eye's height to be seen through human eyes. In this case, a left eye is able to see a left eye planar image 320 revealing three facets including a top side, a front side and a left lateral side of the hexahedron 310 only. And, a right eye is able to see a right eye planar image 330 revealing three facets including the top side, the front side and a right lateral side of the hexahedron 310 only.

Even if a real thing is not actually positioned in front of both eyes of a user, if the left eye planar image 320 and the right eye planar image 330 are set to arrive at the left eye and the right eye, respectively, a user is able to substantially sense the hexahedron 310 as if looking at the hexahedron 310 actually.

Thus, in order to implement the 3D image belonging to the second category in the mobile terminal 100, images of the same object should arrive at both eyes in a manner of being discriminated from each other for the left and right eye images of the same object with a predetermined parallax.

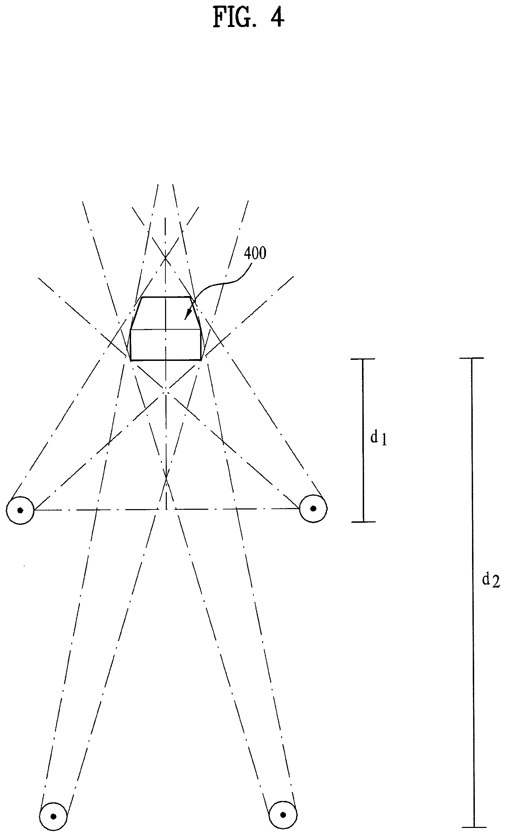

In the following description, 3D depth attributed to the binocular disparity is explained with reference to FIG. 4.

FIG. 4 is a diagram for concept of a sense of distance and 3D depth attributed to binocular disparity.

Referring to FIG. 4, a lateral side ratio of an image entering each eyeball in view of a hexahedron 400 in a distance d1 trough both eyes is relatively higher than that in a distance d2, whereby a difference between images seen through both eyes increases. Moreover, an extent of a stereoscopic effect sensed by a user in view of the hexahedron 400 in the distance d1 can become higher than that in view of the hexahedron 400 in the distance d2. In particular, when a thing is seen through both eyes of a user, a closer subject gives a greater stereoscopic effect, whereas a farther subject gives a smaller stereoscopic effect.

Such a difference in stereoscopic effect can be digitized into a 3D depth or a 3D level. In the following description, a high stereoscopic effect of a thing situated closer shall be represented as a low 3D depth and a low 3D level. And, a low stereoscopic effect of a thing situated farther shall be represented as a high 3D depth and a high 3D level. As the definition of the 3D depth or level is relatively set, a classification reference for the 3D depth or level and an increasing/decreasing direction of the 3D depth or level is changeable.

In order to discriminate the above-mentioned two categories from each other in this disclosure, a stereoscopic image belonging to the first category shall be named '2D stereoscopic image' and a stereoscopic image belonging to the second category shall be named '3D stereoscopic image' or "perceived 3D image.

Methods of implementing a 3D stereoscopic image are described as follows.

First of all, as mentioned in the following description, in order to implement a 3D stereoscopic image, an image for a right eye and an image for a left eye need to arrive at both eyes in a manner of being discriminated from each other. For this, various methods are explained as follows.

### 1) Parallax Barrier Scheme

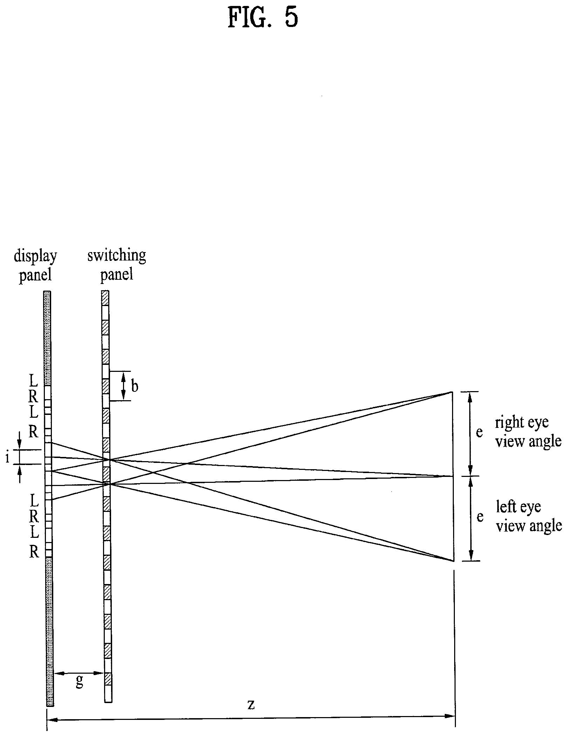

The parallax barrier scheme enables different images arrive at both eyes in a manner of controlling a propagating direction of light by electronically driving a cutoff device provided between a general display and both eyes. This is explained with reference to FIG. 5 as follows.

FIG. 5 is a diagram for describing the principle of a 3D stereoscopic image displaying method using binocular disparity applicable to embodiments of the present invention.

Referring to FIG. 5, in order to display a 3D stereoscopic image, the display unit 151 may include a display panel and a switching panel attached to a top surface of the display panel. The switching panel is electrically controllable and is able to partially cut off or transmit lights to arrive at both eyes. In particular, the display panel may include such a general display device as LCD, LED, AMOLED and the like.

In FIG. 5, 'b' indicates a barrier space of a switching panel, 'g' indicates a gap between a switching panel and a display panel, and 'z' indicates a distance between an eye view position and a display panel. When two images are synthesized by a pixel unit (L, R), as shown in FIG. 5, the switching panel may operate in a manner that a view angle of a right eye and a view angle of a left eye correspond to a pixel included in the right image and a pixel included in the left image, respectively.

In case of attempting to output a 3D stereoscopic image, the switching panel is turned on to separate incident view angles from each other. In case of attempting to output a 2D image, the switching panel is turned off to let the incident view angle pass through. Hence, if the switching panel is turned off, binocular disparity is not separated. The above-configured switching panel facilitates a switching between 2D and 3D, thereby enabling a user to advantageously appreciate a 3D stereoscopic image without wearing polarizing glasses or active-shutter type glasses.

FIG. 5 shows that the parallax barrier works in one axial direction for example, by which the present invention may be non-limited. Alternatively, the present invention may adopt a parallax barrier capable of working in at least two axial directions in accordance with a control signal generated by the controller 180.

### 2) Lenticular

The lenticular scheme relates to a method of using a lenticular screen provided between a display and both eyes. In particular, a propagating direction of light is refracted via lens on the lenticular screen, whereby different images arrive at both eyes, respectively.

### 3) Polarized Glasses

According to the polarized glasses scheme, polarizing directions are set orthogonal to each other to provide different images to both eyes, respectively. In case of circular polarization, polarization is performed to have different rotational direction, whereby different images can be provided to both eyes, respectively.

### 4) Active Shutter

This scheme is a sort of the glasses scheme. In particular, a right eye image and a left eye image are alternately displayed on a display unit with prescribed periodicity. And, user's glasses close its shutter in an opposite direction when an image of a corresponding direction is displayed. Therefore, the image of the corresponding direction can arrive at the eyeball in the corresponding direction. Namely, while the left eye image is being displayed, a shutter of the right eye is closed to enable the left eye image to arrive at the left eye only. On the contrary, while the right eye image is being displayed, a shutter of the left eye is closed to enable the right eye image to arrive at the right eye only.

In the following description, assume that a mobile terminal according to one embodiment of the present invention is able to provide a user with a 3D stereoscopic image via the display unit 151 by one of the above described methods.

Meanwhile, such a graphic for pointing at a specific object on a display unit or selecting a menu from the display unit as an arrow, a finger and the like is called a pointer or a cursor. Yet, the pointer is frequently used to mean a finger, a stylus pen or the like for a touch manipulation and the like. In order to clearly discriminate the pointer and the cursor from each other in this disclosure, a graphic displayed on a display unit is named a cursor and such a physical means for performing a touch, a proximity touch, a gesture and the like as a finger, a stylus pen and the like is named a pointer.

### Visual Feedback Interface

According to one embodiment of the present invention, a method of detecting a position of a pointer of a user on a user interface displayed as a stereoscopic 3D image and providing a visual feedback corresponding to the detected position to the user interface and mobile terminal for implementing the same are provided.

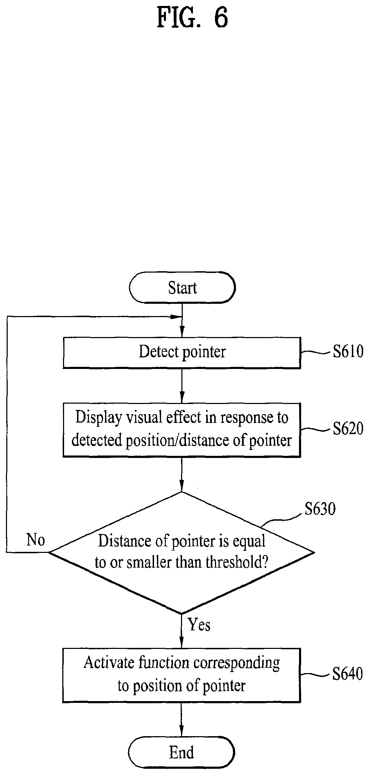

To this end, an operating process of a mobile terminal is described with reference to FIG. 6 as follows.

FIG. 6 is a flowchart for one example of an operating process of a mobile terminal to activate a user interface according to one embodiment of the present invention.

Referring to FIG. 6, if a prescribed menu manipulation or an application activation from a user or an event (e.g., a message reception, a call generation, etc.) occurs, the controller 180 detects a position of a pointer using one of various detecting means including the camera 121, the sensing module 140 and the like provided to the mobile terminal 100 [S610].

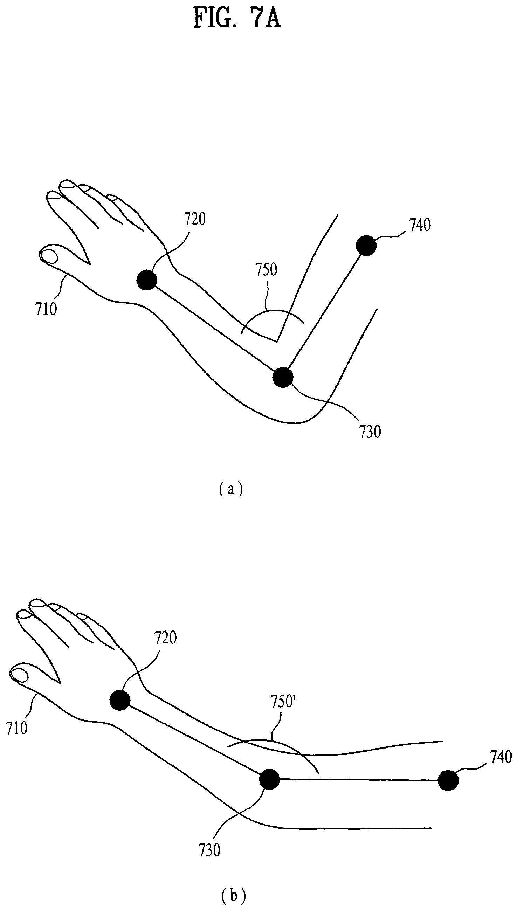

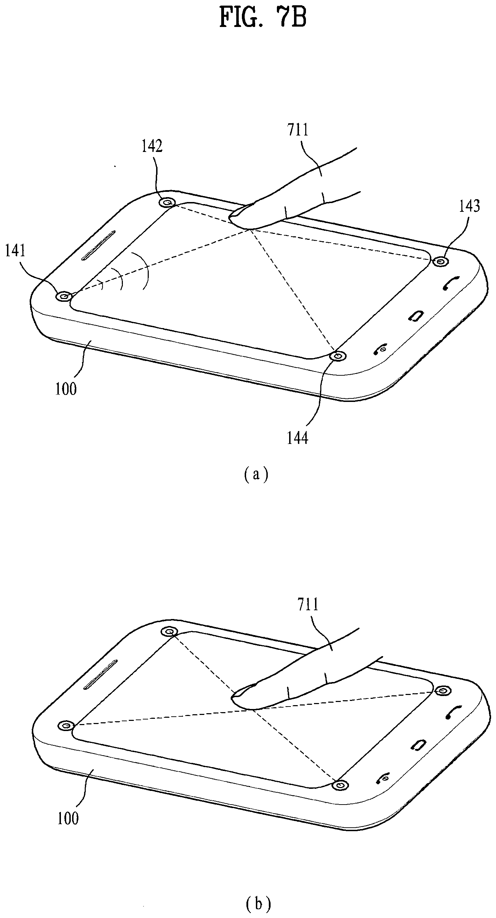

A method of detecting the position of the pointer shall be described in detail with reference to FIG. 7A and FIG. 7B later.

Having detected the position of the pointer, the controller 180 displays a visual effect corresponding to the detected pointer position and a distance from the mobile terminal body and/or a distance from a selection target object selectable with the pointer [S620].

In this case, the selection target object may mean an object via which a function previously set for the object can be activated if the object is selected by a gesture (e.g., an action of a pointer approaching a specific selection target object within a predetermined distance, an action of a pointer staying at a corresponding position over predetermined duration, etc.) with the pointer. In particular, at least two selection target objects may be simultaneously displayed on the display unit 151 in a manner of having prescribed 3D depths given thereto at different positions if necessary.

In this specification, a point, at which a pointer is located in a 3D space, is described in a manner of being divided into a position and a distance. In this case, the 'distance' may mean an extent vertically spaced apart from a reference point (e.g., a display unit, a selection target object, etc.), i.e., coordinates on Z-axis and the 'position' may mean coordinates (X, Y) in a plane in parallel with a display unit. For instance, if a pointer is moving in parallel in vertical top direction by maintaining a contact with one point on a display unit, it can be said that Y-axis value is increasing. If the pointer is moving in parallel in right direction, it can be said that X-axis is increasing. If the pointer is vertically moving away from a display plane without parallel movement, it can be said that Z-axis value is increasing.

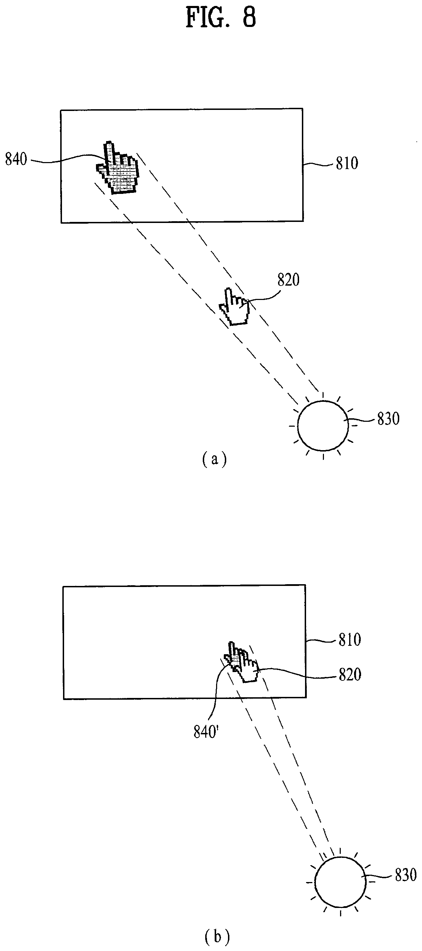

Moreover, the distance from the selection target object may mean a distance in consideration of a 3D depth at which the selection target object is displayed as a stereoscopic 3D image. For instance, if a 3D depth is given in a manner that a selection target object looks as if projecting from a mobile terminal body (i.e., a display unit), the selection target object seems to a user to be situated closer than the mobile terminal body. Therefore, in the present specification, the distance from the mobile terminal body and the distance from the selection target object are described by being discriminated from each other. To this end, the controller 180 may be able to calculate a 3D depth value of a selection target object by real time or a 3D depth value preset per a type of a selection target object may be saved in the memory 160. Examples of the visual effects shall be described in detail with reference to FIGs. 8 to 13 later.

While the controller 180 displays the visual effect, if the distance between the pointer and the mobile terminal body and/or the selection target object selectable with the pointer gets closer to a threshold or below, the controller 180 determines it as a gesture to select the selection target object corresponding to the position of the pointer (i.e., the selection target object selected with the pointer) [S630] and may be then able to activate a function set for the corresponding selection target object [S640].

If the distance between the pointer and the mobile terminal body and/or the selection target object selectable with the pointer exceeds the threshold, the controller 180 may be able to display only a visual effect corresponding to a motion of the pointer, i.e., a visual effect to feed back a current pointer position determined by the controller 180 to a user. Moreover, the above-mentioned visual effect may be displayed only if the pointer is detected as located within a predetermined distance (e.g., a maximum detectable distance of a detecting means) from the mobile terminal 100.

### <Determining Position/Distance of Pointer>

In the following description, methods of determining a position and distance of a pointer according to the present embodiment are explained. The controller 180 of the mobile terminal 100 acquires a position, moving trace, motion pattern and shape of such a pointer as a user's hand, a user's finger, a stylus pen and the like using images consecutively photographed via the camera 121 and may be then able to recognize the acquired information on the pointer as a corresponding user command. Optionally, if a proximity sensor or a distance sensor is combined with the image photographed via the camera 121, it may be able to raise detection accuracy. In doing so, a plurality of sensors may be usable. A pointer position/distance determining method is described in detail with reference to FIG. 7A and FIG. 7B as follows.

FIG. 7A is a diagram for one example of a joint recognizing method for detecting a pointer position, which is applicable to embodiments of the present invention.

Referring to FIG. 7A, first of all, joint recognition means a method of recognizing a user's action in a manner of consecutively acquiring images corresponding to a human body part operable as a pointer, e.g., a user's arm using such an image acquiring means as a camera and the like and then determining a joint part by analyzing the consecutively acquired images. For instance, by regarding a hand part 710 as a pointer tip, assume a case that an angle 750 formed by a line of a wrist 720 and an elbow 730 and a line of the elbow 730 and a shoulder 740 shown in FIG. 7A (a) increases into an angle 750' shown in FIG. 7A (b). In this case, the controller 180 analyzes the images consecutively acquired from the image acquiring means in the course that a posture formed by the user's arm is changing from the posture shown in FIG. 7A (a) to the posture shown in FIG. 7A (b). Through this analysis, the controller 180 obtains the positions of the respective joint parts 720, 730 and 740 and may be then able to determine that the user holds out the pointer as the angle of the elbow joint increase [i.e., the pointer approaches toward the mobile terminal].

FIG. 7B is a diagram for one example of a distance recognizing method for detecting a pointer position, which is applicable to embodiments of the present invention.

Referring to FIG. 7B, first of all, assume a case that a plurality of proximity sensors 141 to 144 are arranged around corners of the mobile terminal 100. When a pointer 711 approaches the mobile terminal 100, the controller 180 acquires information on a distance to the pointer 711 from each of the proximity sensors 141 to 144 and may be then able to determine a position of the pointer by such calculation as triangulation and the like. For instance, when the pointer 711 moves from one position shown in FIG. 7B (a) to another position shown in FIG. 7B (b), the distance from the pointer determined by each of the sensors decreases at the same rate, whereby the controller 180 may be able to determine that the pointer 711 decreases its distance from the mobile terminal without parallel shift. Alternatively, it may be able to determine a position of a pointer in a manner of irradiating infrared toward the pointer from at least one portion of the mobile terminal and then sensing a pattern of the returning infrared reflected by the pointer using an infrared sensor [not shown in the drawing].

Moreover, the present invention may be non-limited by the above pointer position/distance measuring method described with reference to FIG. 7A and FIG. 7B. And, it is apparent to those skilled in the art that any method of detecting a position of a pointer using a sensor may apply to the present invention.

### <Visual Effect>

In the following description, examples of the visual effects to feed back a detected pointer position to a user are explained with reference to FIGs. 8 to 13.

First of all, a shadow effect is described. In particular, a shadow effect according to the present embodiment means a virtual shadow effect. In particular, when a virtual light source is set at a specific position, if a virtual light generated from the virtual light source is blocked by a pointer, the virtual shadow effect is caused. The shadow effect is described in detail with reference to FIG. 8 as follows.

FIG. 8 is a diagram for describing the concept of a shadow effect according to one embodiment of the present invention.

Referring to FIG. 8, when a pointer 820 is situated in front of one plane 810 and a light source 830 is placed in lateral rear of the pointer 820, a shadow 840 appears at a point where a straight extension line from the light source 830 toward the pointer 820 meets the plane 810 [FIG. 8 (a)]. In doing so, if the pointer 820 approaches the plane 810 [FIG. 8 (b)], the pointer 820 gets away from the light source 830. And, a shadow 840' formed on the plane 810 gets smaller and thicker than the former shadow 840 shown in FIG. 8 (a). Moreover, if the pointer 820 gets closer to the plane 810, the shadow gets closer to a hand.

If the above-described shadow effect is applied to a user interface according to the present embodiment, a plane may become a selection target object or a layer in which the selection target object is arranged. Although a light source does not exist actually, the controller may control a graphic effect corresponding to a shadow to be outputted via the display unit in accordance with a detected pointer position. Therefore, if a user brings the pointer closer to the selection target object or the plane having the selection target object arranged therein, the user may have a visual experience of an effect as if the shadow gets thicker and closer. In particular, if the shadow is displayed distant from the pointer, the user may be able to recognize that the pointer leaves a distance from the selection target object. On the contrary, if the shadow and the pointer are situated close to each other, the user may be able to recognize that the pointer is situated close to the selection target object.

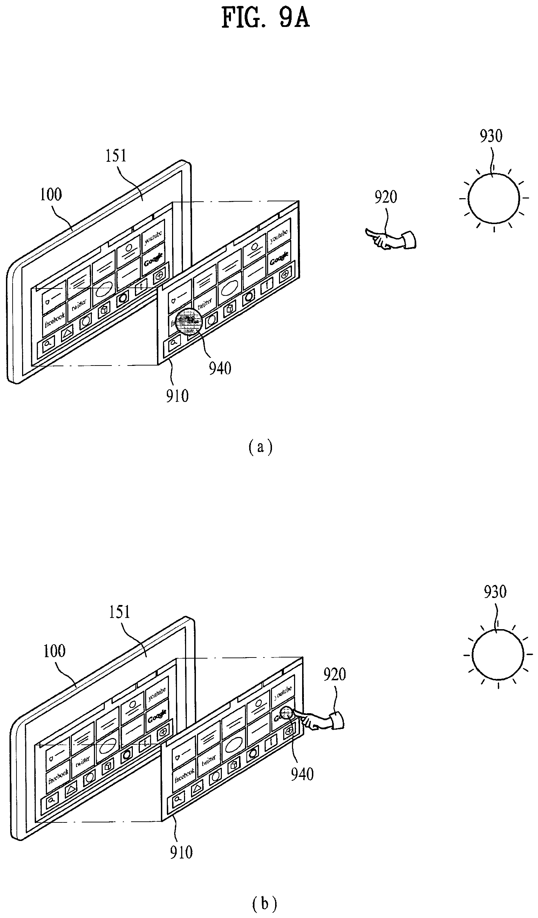

One example of applying the above-mentioned shadow effect to a selection target object is described in detail with reference to FIG. 9A as follows. From the following drawings including FIG. 9A, the camera 121 or the sensor 140, which is provided to determine a position of a pointer, shall be omitted for clarity.

FIG. 9A is a diagram for one example of a shadow effect displayed on a selection target object implemented as a stereoscopic 3D image on a mobile terminal according to one embodiment of the present invention.

Referring to FIG. 9A, assume that a layer 910 including a plurality of icon type selection target objects is displayed as a stereoscopic 3D image on the display unit 151 of the mobile terminal 100 and that a virtual light source 930 is situated in right rear of a pointer 920. And, assume that a 3D depth in positive (+) direction is given to the layer 910. In particular, in user's view, assume that the layer looks as if floating on the display unit 151.

Referring to FIG. 9A (a), when the pointer 920 is situated distant far from the layer 910, the controller 180 controls the display unit 151 to display the shadow effect 940 in a large size on a left part of the layer 910. Referring to FIG. 9A (b), if the pointer 920 gets closer to the layer 910, the controller 180 may control the shadow effect 940' to be displayed closer to the pointer 920 gradually. In doing so, the shadow effect gets thicker while its size becomes smaller.

As the above-mentioned effect if provided, a user may be able to obtain a position of the pointer relative to the selection target object displayed as the stereoscopic 3D image or the layer containing the stereoscopic 3D image.

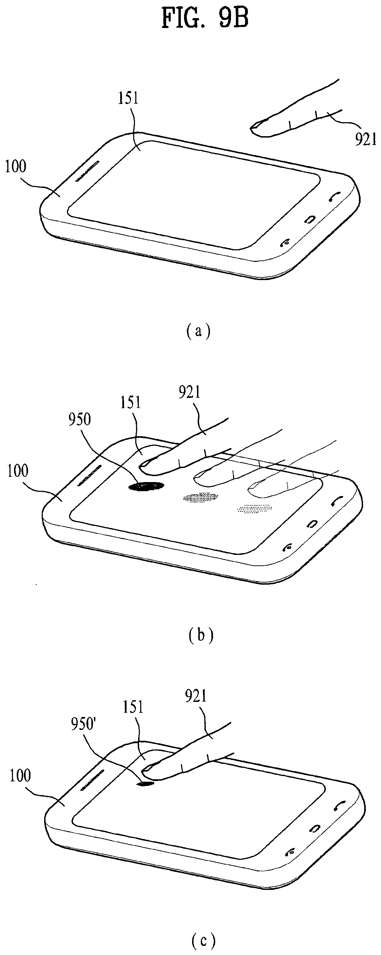

Meanwhile, it is a matter of course that the aforementioned shadow effect can be displayed if a stereoscopic 3D image is not applied to such a user interface as a selection target object and the like. This is described with reference to FIG. 9B as follows.

FIG. 9B is a diagram for one example of a shadow effect when a selection target object is implemented as a 2D (2-dimensional) image on a mobile terminal according to one embodiment of the present invention.

Referring to FIG. 9B, first of all, assume that a selection target object is being displayed as a 2D image on the display unit 151 of the mobile terminal 100 and that a virtual light source is situated in vertical top direction of a pointer 921. In case that a distance between the mobile terminal 100 and the pointer 921 is equal to or greater than a predetermined distance, a shadow effect is not displayed [FIG. 9B (a)]. In doing so, as the pointer 921 gets close to the mobile terminal 100, a shadow effect 950 can be displayed on the display unit 151 in response to a motion of the pointer 921 [FIG. 9B (b)]. If the pointer 921 gets further closer to the mobile terminal 100, a shadow effect 950' can become thicker and smaller [FIG. 9B (c)].

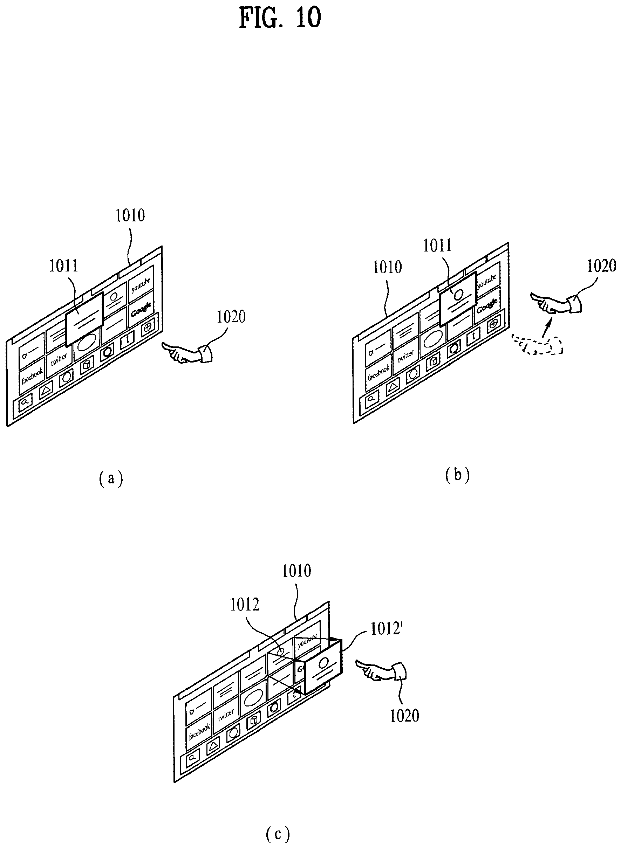

For another example of a visual effect to feed back a position of a pointer to a user, it may be able to give a visual effect to a selection target object. This is described in detail with reference to FIG. 10 as follows.

FIG. 10 is a diagram for one example of a visual effect given to a selection target object implemented as a stereoscopic 3D image on a mobile terminal according to one embodiment of the present invention in accordance with a position of a pointer.

Referring to FIG. 10, first of all, assume a case that a plurality of selection target objects are arranged on a layer having a 3D depth in positive (+) direction given thereto, which is similar to the former assumption for FIG. 9A. Yet, a body of the mobile terminal is not shown in FIG. 10.

Referring to FIG. 10 (a), the controller 180 may be able to display a selection target object 1011 corresponding to a currently detected position of a pointer 1020 for a layer 101 having a plurality of selection target objects arranged therein in a manner of enlarging the selection target object 1011 at a prescribed ratio. In doing so, referring to FIG. 10 (b), if the pointer 102 moves in right direction, the controller 180 detects the movement of the pointer 1020 and is then able to enlarge a selection target object preset right to the previously enlarged selection target object 1011. Alternatively, referring to FIG. 10 (c), instead of the effect of enlargement, in a manner of changing the 3D depth given to the selection target object 1012 corresponding to the detected pointer position, a selection target object 1012' may be enabled to look as if projecting from the layer 1010.

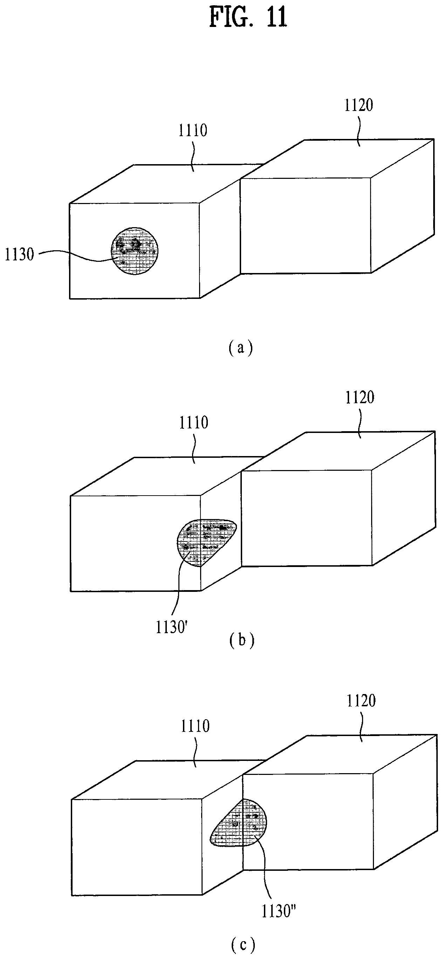

Meanwhile, a selection target object or a layer having the selection target object displayed therein may be configured further 3-dimensionally. In doing so, a visual effect may be correspondingly modifiable. This is described in detail with reference to FIG. 11 as follows.

FIG. 11 is a diagram for one example of displaying a visual effect in accordance with an arranged formation of a selection target object according to one embodiment of the present invention.

Referring to FIG. 11, first of all, the mobile terminal body is omitted from FIG. 11, which is similar to FIG. 10. Assume that 3D depth values in different positive (+) directions are given to cubic selection target objects 1110 and 1120, respectively. And, assume that an effect for visual feedback of a pointer position includes a shadow.

The controller 180 determines a detected pointer position and then displays a shadow effect at a center of a left cube 1110 [FIG. 11 (a)]. In doing so, if the pointer gradually moves in right direction [FIG. 11 (b), FIG. 11 (c)], in order to provide a user with 3D effects of the selection target objects, shapes of the shadows 1130' and 1130" may be changeable in accordance with contour arrangement states of the selection target objects, respectively.

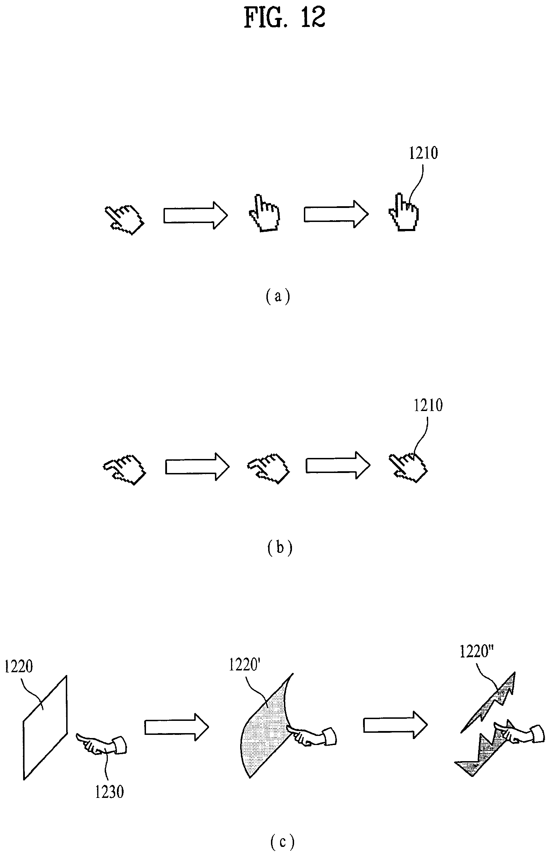

Meanwhile, instead of the shadow effect of which size and thickness are changeable in proportion to a distance, a shape of a cursor may be configured changeable in proportion to a distance. This is described in detail with reference to FIG. 12 as follows.

FIG. 12 is a diagram for one example of changing a shape of a cursor depending on a distance between a selection target object and a pointer according to one embodiment of the present invention.

Referring to FIG. 12 (a) and FIG. 12(b), the controller 180 may control a finger-shaped cursor 1210 to be shifted to a layer, in which a selection target object is arranged, in response to a top-bottom/right-left shift of a pointer. In doing so, a shape of the finger-shaped cursor 1210 may be changeable if a distance between the pointer and the mobile terminal 100 or the layer including the selection target object decreases gradually. For instance, FIG. 12 (a) shows that if the pointer gets closer, the finger indicates 12 o'clock direction from 10 o'clock direction. For instance, FIG. 12(b) shows that if the pointer gets closer, a distance of a pointer is visually fed back to a user in a manner of straightening a bent index finger gradually. For instance, referring to FIG. 12(c), if a distance between a pointer 1230 and the mobile terminal 100 or the layer including the selection target object enters a predetermined distance range, the controller 180 controls a semitransparent film 1220 to be displayed as a stereoscopic 3D image in response to a position of the pointer 1230. If the pointer gets closer, the controller 1890 controls the semitransparent film 1220' to be flexed as if pushed. If the pointer gets further closer, the controller 180 displays a stereoscopic 3D image of an effect 1220" of tearing the film 1220. In each of the examples shown in FIG. 12, the visual effect at a most right side may be used as a visual effect to indicate that a selection target object is selected, i.e., that a function given to the selection target object is activated.

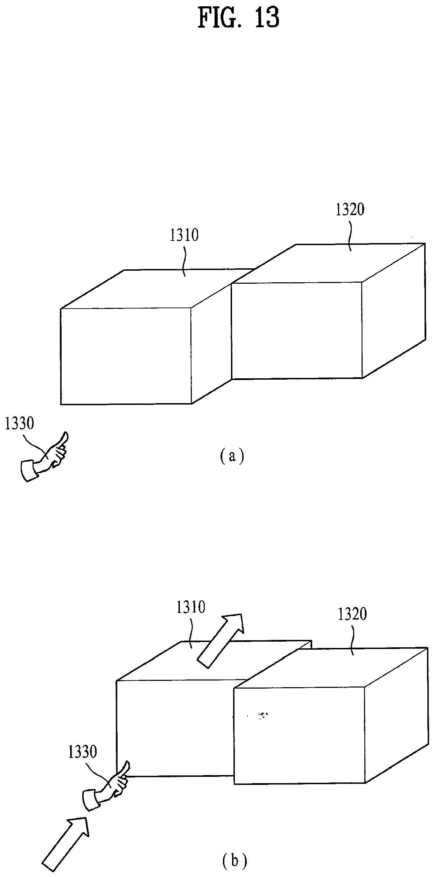

Meanwhile, a visual effect according to the present embodiment may enable a selection target object to move. This is described in detail with reference to FIG. 13 as follows.

FIG. 13 is a diagram for one example of changing an arrangement formation of a selection target object depending on a distance between the selection target object and a pointer according to one embodiment of the present invention.

Referring to FIG. 13, first of all, the mobile terminal body is omitted from FIG. 13, which is similar to FIG. 11. Assume that 3D depth values in different positive (+) directions are given to cubic selection target objects 1310 and 1320, respectively. If a user makes a pointer 1330 approach a left object 1310 [FIG. 13 (a)], a visual effect may be displayed in a manner that the object 1310 situated in front of the pointer 1330 moves backward [FIG. 13 (b)].

Besides the above visual effect described with reference to the drawing, a method of thinly out-focusing objects around an object determined by the controller 180 as indicated by a pointer, a method of displaying information (e.g., an arrow, etc.) on a rotated direction of such an object as a jog shuttle around the corresponding object, a method of displaying determined coordinates (x, y, z) of a pointer on one region of a display unit and the like may be applicable.

The above-mentioned visual effects may be individually applicable. And, it is apparent to those skilled in the art that at least two of the above-mentioned visual effects may be applicable simultaneously. For instance, a shadow effect and a selection target object enlarging effect may be displayed together in accordance with a position of a pointer.

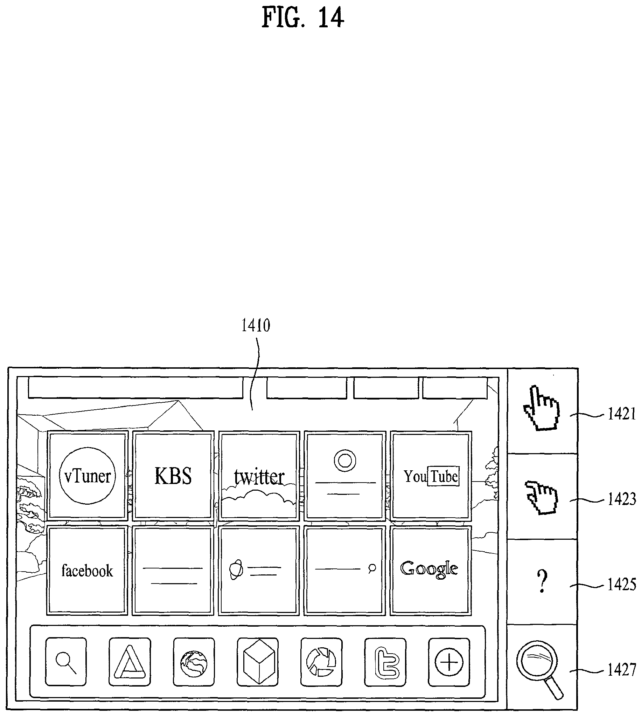

Besides the method of, when a pointer enters a predetermined distance range from a selection target object, selecting the corresponding object, it may be able to use a method of enabling a user to select a cursor of a different function in advance and inputting a specific command by moving the corresponding cursor. This is described in detail with reference to FIG. 14 as follows.

FIG. 14 is a diagram for one example of changing an arrangement formation of a selection target object depending on a distance between the selection target object and a pointer according to one embodiment of the present invention.

Referring to FIG. 14, a plurality of selection target objects are arranged and 4 kinds of cursors are displayed on a right side end of a layer 1410 to which a 3D depth in positive (+) direction is given. In particular, a 1-finger cursor 1421 for activation and selection, a 2-finger cursor 1423 for a drag & drop, a question mark cursor 1425 for a help function and a magnifying glass cursor 1427 for enlargement or zoom-in are provided as the 4 kinds of the cursors. If a user enables a pointer to approach a specific cursor within a predetermined distance or enables the pointer to stay on the corresponding cursor for predetermined duration, the controller 180 may activate the corresponding cursor. If so, the selected cursor may be able to move on the layer 1410 in response to a motion of the pointer.

The above-mentioned visual effects may be especially useful for the following situations.

First of all, in case of a game performed in a virtual 3D space, e.g., a tennis game, when a racket is replaced by a pointer, it may be able to know whether the racket can hit a ball approaching as a stereoscopic 3D image.

Secondly, when a menu including a plurality of facets is provided in a virtual space, accuracy of selection can be enhanced. For instance, a menu can be provided to a bottom facet and a top facet of a 3D space of a rectangular parallelepiped as well as a front facet of the 3D space. Since a shadow moving along a bottom and a shadow moving along a sidewall differ from each other in shape, a motion of a shadow may be able to provide a feedback to a user to enable to correctly select a menu provided in a virtual space.

Thirdly, since all sites do not provide mobile webpages currently, when a PC version of a webpage is browsed in a mobile terminal, it may frequently happen that a button/hyperlink is not correctly selected by a pointer touch input. In doing so, a user enlarges a screen for an accurate touch and then presses a button/hyperlink. If a shadow or object highlight is utilized by applying the above mentioned visual effect, the user may be able to predict a button/hyperlink to click. Therefore, it is able to prevent incorrect or inaccurate clicks.

Fourthly, while typewriting is performed on a window for text editing using a virtual keypad, if a user intends to shift a cursor to a specific position to correct typing mistakes, the above-mentioned visual effect is usable for a correct or accurate cursor shift.

### Multi-layer User Interface

In the following description, a multi-layer user interface according to another embodiment of the present invention is explained. According to another embodiment of the present invention, a user interface configured in a manner of stacking a plurality of layers, to which different 3D depths are given, is displayed as a stereoscopic 3D image on a display unit.

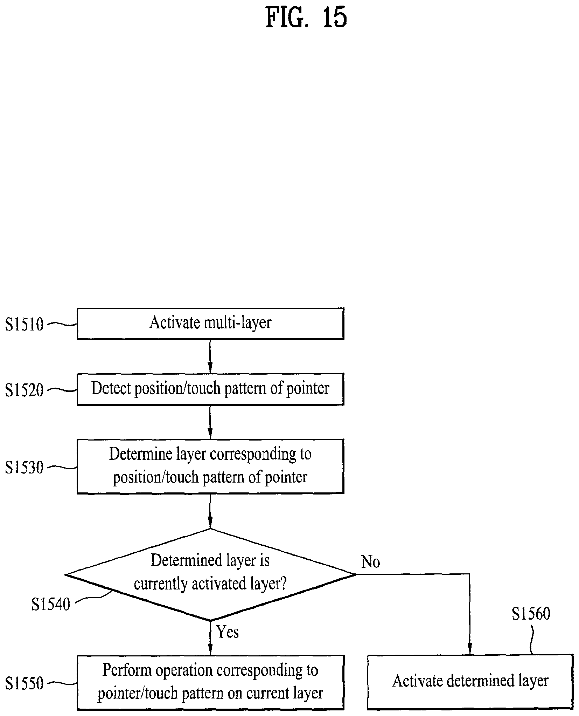

In this case, upper/lower or next/previous pages of a specific menu may be simultaneously displayed on a plurality of the layers, respectively. Alternatively, active screens of different applications may be displayed on a plurality of the layers, respectively. And, each of a plurality of the layers may be activated or deactivated depending on a touch type or position of a pointer. Moreover, transparency of each of a plurality of the layers may be changed depending on a touch type or position of a pointer. To this end, a mobile terminal operating method is described in detail with reference to FIG. 15 as follows.

FIG. 15 is a flowchart for one example of an operating process of a mobile terminal to activate a user interface according to another embodiment of the present invention.

Referring to FIG. 15, if a prescribed menu manipulation or an application activation from a user or an event (e.g., a message reception, a call generation, etc.) occurs, the controller 180 activates a multi-layer user interface according to the present embodiment [S1510].

In doing so, 'activating' may mean creating a plurality of layers included in the multi-layer user interface and displaying a plurality of the created layers as stereoscopic 3D images on the display unit.

Subsequently, the controller 180 determines a position of a pointer or a touch pattern of the pointer by at least one of the above-mentioned methods according to one embodiment of the present invention [S1520]. In this case, the touch pattern conceptionally includes at least one of a contact touch, a proximity touch, a single touch, a multi-touch and a drag touch.

In accordance with the determined touch pattern, the controller 180 determines whether a motion of the corresponding pointer corresponds to which one of the layers [S1530].

In doing so, if the determined layer is a currently active layer or an active defaulted layer [S1540], the controller 180 performs an operation corresponding to the determined touch pattern on the active layer [S1550]. On the contrary, if the determined layer is not a currently active layer or an active defaulted layer, the controller 180 activates the determined layer [S1560].

In doing so, if a layer is activated, it may mean that it is ready to receive an input of a command for the corresponding layer. And, prescribed transparency may be given to other inactive layers in order to prevent the activated layer from being visually blocked by the inactive layers. This is attributed to the following reason. First of all, as mentioned in the foregoing description, since the multi-layer user interface according to the present embodiment is displayed in a manner that a plurality of layers are stacked on each other, if an inactive layer exists over an active layer, the active layer under the inactive layer can be seen by giving prescribed transparency (full transparency included) to the inactive layer.

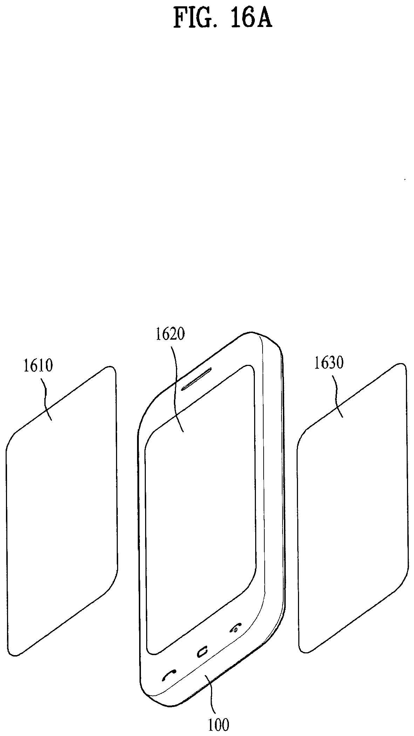

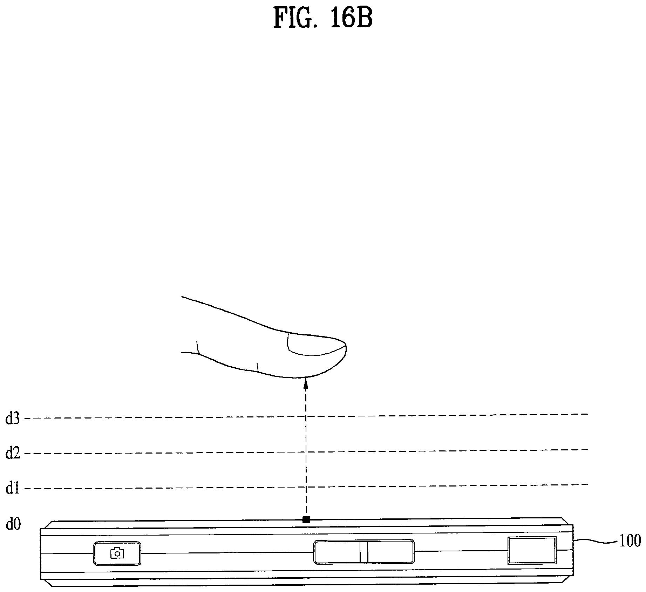

In the following description, a structure of a multi-layer user interface and layer selecting method thereof according to the present embodiment are explained with reference to FIG. 16A and FIG. 16B.

FIG. 16A is a diagram for one example of a multi-layer user interface configuration including 3 layers according to another embodiment of the present invention.

Referring to FIG. 16A, first of all, assume a case that a multi-layer user interface according to the present embodiment is configured with 3 layers. A 1^{st} one 1610 of the 3 layers has a 3D depth in a positive (+) direction, a 2^{nd} one 1620 of the 3 layers has a zero 3D depth (i.e., the same 3D depth of the display unit 151 of the mobile terminal 100), and a 3^{rd} one 1630 of the 3 layers has a 3D depth in negative (-) direction. In this case, regarding a user' view with reference to the display unit 151 of the mobile terminal 100, the positive (+) direction 3D depth means a 3D depth enabling an object to be seen as floating over the display unit 151 and the negative (-) direction 3D depth means a 3D depth enabling an object to be seen as submerging under the display unit 151. For clarity of the following descriptions, the layer 1610 having the positive (+) direction 3D depth, the layer 1620 having the zero 3D depth and the layer 1630 having the negative (-) direction 3D depth shall be named a plus layer, a zero layer and a minus layer, respectively.

The plus layer may be activated or manipulated by a proximity touch with a pointer. Since a positive (+) direction 3D effect is given to the plus layer, the plus layer can be displayed in 3D. The plus layer may be always displayable when the multi-layer user interface according to the present embodiment is active. Alternatively, the plus layer may be displayable only if a pointer exists within a predetermined range from the touchscreen. Moreover, transparency of the plus layer may change depending on a pointer existing distance. Besides, the plus layer may play a role as a layer for displaying a popup menu of a sub-layer if necessary.

The zero layer may be activated or manipulated by a direct touch. Since 3D depth is not given to the zero layer, the zero layer is able to secure clear readability. The zero layer is generally able to display a lower frame or page of the plus layer. If the pointer approaches closer to the touchscreen, the zero layer can be displayed clearer.

A method of manipulating each of the layers of the above-configured multi-layer user interface is described with reference to FIG. 16B as follows. FIG. 16B is a diagram for one example of a layer selecting/activating method in a multi-layer user interface according to another embodiment of the present invention.

Referring to FIG. 16B, with reference to a top side of the mobile terminal 100 provided with the touchscreen, the zero layer and the plus layer may be displayed at a height d0 and a height d2, respectively. Besides, the minus layer may be situated below the height d0, which is not shown in the drawing. In doing so, the plus layer displayed at the height d2 can be activated if a pointer exists at the height between d3 and d2. If the pointer goes down below a specific height (e.g., d2), the zero layer can be activated by getting clearer while the plus layer gets more transparent. After the plus layer has been activated, a proximity touch input may be performed as a method of inputting a command to the plus layer. For instance, if the pointer enters the height between d2 and d3, the controller 180 activates the plus layer. Subsequently, if the pointer performs a specific gesture at the corresponding height, the controller 180 may be able to recognize the specific gesture as a command for manipulating the plus layer.

Preferably, a lower limit of a distance range of the pointer for the activation and command input for the plus layer may be set in consideration of a height, at which the pointer generally stays when a user inputs a touch command to the zero layer using the pointer. This is to prevent a malfunction that the plus layer is activated while the user is manipulating the zero layer. For instance, if a lower limit of a distance range of the pointer for the activation and command input for the plus layer is set too low, it may cause a problem that the plus layer may be activated in response not only to a contact touch input via the pointer but also to a motion of the pointer that moves in the vicinity of the touchscreen before/after the contact touch input via the pointer.

Of course, using hardware key buttons in order to perform a clearer command input, it may be able to activate the plus layer only if a specific key button is being manipulated. Alternatively, a touch input, which is inputted in the course of manipulating the corresponding key button, can be recognized as an input to the plus layer only.

Meanwhile, when the touch panel 135 is provided to a backside of the mobile terminal 100, as shown in FIG. 2B, the minus layer can be activated if a touch input to the backside touch panel 135 is detected. Once the minus layer is activated, prescribed transparency may be given to each of the plus layer and the zero layer. When the touchscreen 151 is a pressure sensing type that detects a level of a touch input of the pointer, if a predetermined pressure or higher is applied to the touchscreen 151, the minus layer may be activated.

In the following descriptions, as mentioned in the foregoing description with reference to FIG. 16A, assume that the multi-layer user interface includes 3 layers, by which the present invention may be non-limited. And, it is apparent to those skilled in the art that the multi-layer user interface can include a plurality of layers more or less than 3 layers and that at least two plus or minus layers differing from each other in 3D depth can exist. According to the present embodiment, the aforementioned visual effect corresponding to the motion of the pointer according to one embodiment of the present invention may be displayed in response to the motion of the pointer for manipulating each of the layers.

### <Application to Messenger>

In the following description, explained is a case that the above-described multi-layer user interface is applied to a messenger application having a higher/lower page structure.

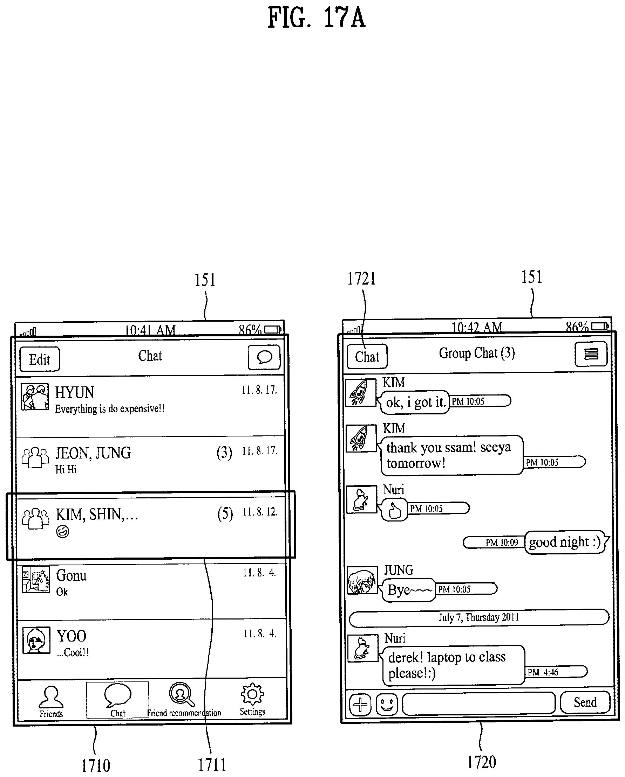

FIG. 17A is a diagram to describe a messenger page structure according to another embodiment of the present invention.

Referring to FIG. 17A, a higher layer 1710 for displaying a chat counterpart list of a messenger application is shown on a left part of the drawing. And, when one chat counterpart is selected from the chat counterpart list, messages exchanged with the corresponding chat counterpart are displayed on a lower page 1720 shown in a right part of the drawing. According to a general messenger application, in order to switch a screen from the higher page 1710 to the lower page 1720, it is necessary to select a specific counterpart 1711 from the higher page using a touch input or the like. On the contrary, in order to switch the screen from the lower page 1720 to the higher page 1710, it is necessary to select a return menu 1721 from the lower page. And, it is generally difficult to view both of the higher page and the lower page at the same time. Moreover, in order to check messages exchanged with other counterparts, the higher page is paged again and a prescribed counterpart is then selected.

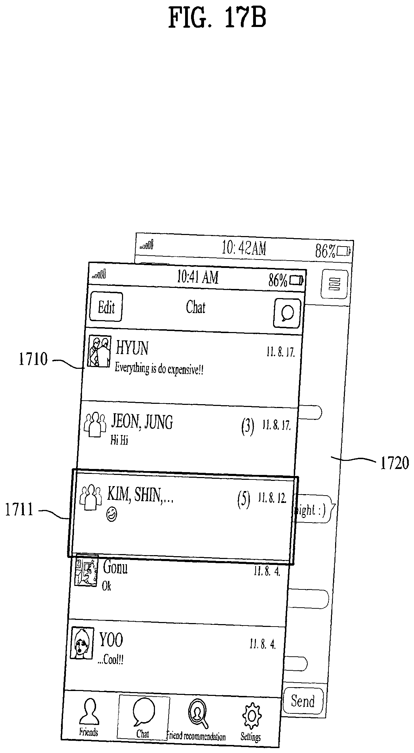

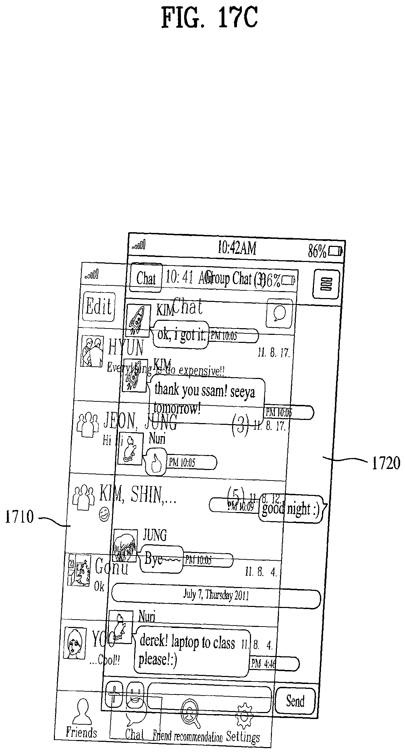

To settle the above-mentioned inconvenience and/or problem, a messenger application, to which a multi-layer user interface according to the present embodiment is applied, is described in detail with reference to FIG. 17B and FIG. 17C as follows.

FIG. 17B shows a case that a higher page is active in a messenger to which a multi-layer user interface according to another embodiment of the present invention is applied. And, FIG. 17C shows a case that a lower page is active. Referring to FIG. 17B, the higher page 1710 shown in FIG. 17A and the lower page 1720 are stacked on each other in a manner of being assigned to the plus layer and the zero layer, respectively. In doing so, according to a default setup or a position of a pointer, if the plus layer is activated, the higher page 1710 is displayed non-transparently and the lower page 1720 may be blocked by the higher page 1710. If a user places the pointer at a specific user list 1711 (e.g., a proximity touch) and then enables the pointer to approach the touchscreen gradually, the lower page 1720 for displaying the chat list corresponding to the proximity touched user list is activated and the higher layer 1710 may become transparent gradually [FIG. 17C].

Thereafter, if the user just lifts the pointer to a predetermined height or higher (i.e., a range for selecting/manipulating the plus layer), the user may go back to the higher page 1710. Moreover, after a proximity touch has been performed on another user list on the higher page, if the touchscreen is approached by the pointer, the lower page containing the messages exchanged with other users can be displayed on the zero layer.

### <Creating Shortcut Icon, Activating Widget, Checking Update>

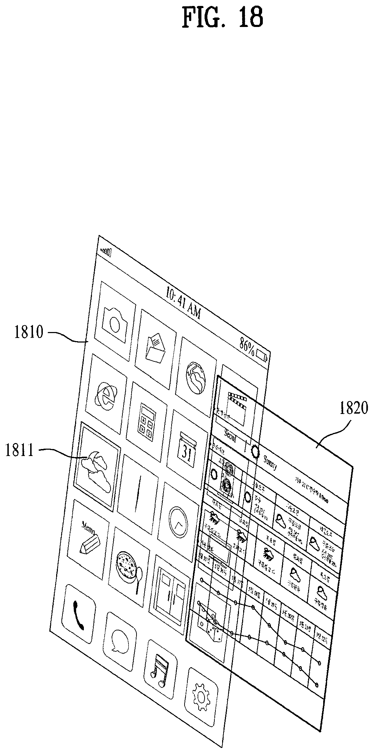

In the following description, explained with reference to FIG. 18 is a case that the above-described multi-layer user interface is applied to a widget and a main menu.

FIG. 18 is a diagram for one example of a widget activating method according to another embodiment of the present invention.

Referring to FIG. 18, first of all, assume a case that a main menu 1810 containing icons for providing shortcuts to applications installed at the mobile terminal 100 is displayed on a zero layer. If a pressure touch over a predetermined level is inputted to an icon 1811 corresponding to an application for providing a widget to a background screen is inputted via the touchscreen, the zero layer becomes transparent and a menus layer, on which a background screen 1820 is displayed, is activated. In this case, the widget provided by the selected application is arranged on the background screen 1820. After the minus player has been activated, in case that the touchpad 135 is provided to the backside of the mobile terminal 100, it may be able to manipulate the background screen 1820 in a manner of applying a touch input to the touchpad 135 provided to the backside of the mobile terminal 100.

If an icon, which does not provide a widget, is selected from the main menu 1810 by a pressure touch, a shortcut icon of a corresponding application can be displayed on a background screen 1820 displayed via the minus layer. If a specific icon is selected from the main menu 1810 by a long touch instead of a pressure touch, a plus layer is activated and a shortcut of the corresponding icon can be set on a background screen displayed on the plus screen [not shown in the drawing]. Moreover, if an SNS application icon indicating a presence of an update is selected from the main menu 1810 by a pressure touch, the minus layer is activated and an updated SNS page can be displayed on the active minus player.

### <Setting Menu Having A Plurality of Menu Depths>

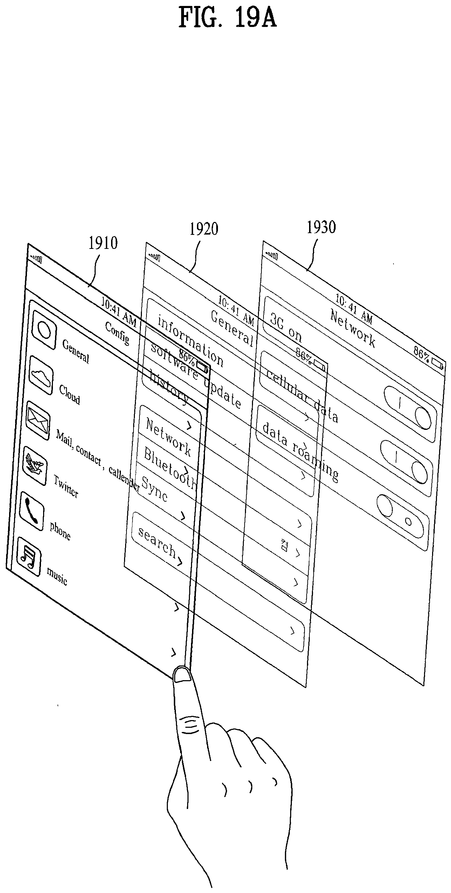

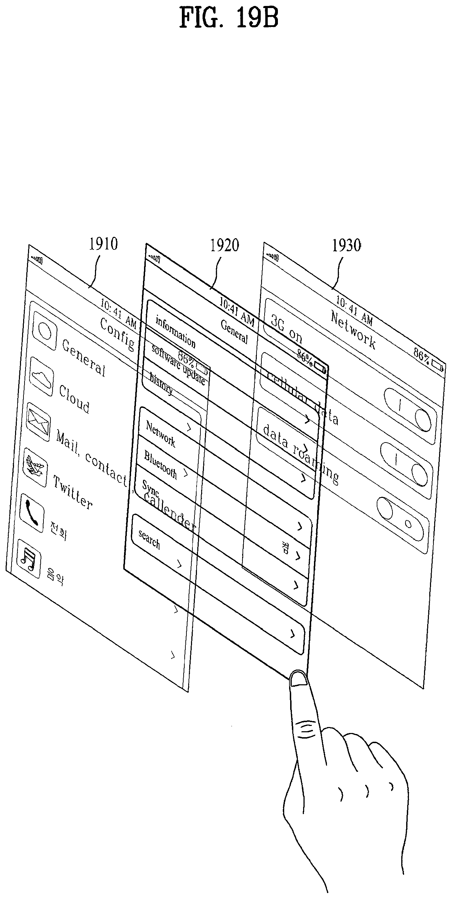

In the following description, a case of applying the above-described multi-layer user interface to a setting menu having a plurality of menu depths is explained in detail with reference to FIG. 19A and FIG. 19B.

FIG. 19A and FIG. 19B are diagrams for examples of a method for activating a setting menu having 3-step menu depths according to another embodiment of the present invention.

Referring to FIG. 19A, a most higher page 1910 of a setting menu is assigned to a plus layer, a least lower item page 1920 of a specific item of the most higher layer page is assigned to a zero layer, and a least lower item page 1930, which is a lower page of a specific menu of a lower item page, is assigned to a minus layer.

In particular, in case that pages are assigned to all the 3 layers, as shown in FIG. 19A, the page assignments may follow a default setting or may be configured with pages related to an item checked/changed last in the event of paging a previous setting menu. Alternatively, when a setting menu is paged, the most higher page 1910 can be displayed on the zero layer only. In doing so, if a specific item is selected from the most higher page, the most higher page moves away into the plus layer by becoming semitransparent and the lower item page 1920 corresponding to the selected item can be displayed on the zero layer. Subsequently, if a specific item is selected from the lower item page, the lower item page becomes semitransparent and the least lower item page 1930 corresponding to the selected item can be displayed on the minus layer. After the pages have been set on the 3 layers, respectively, it may be able to determine the layer that will be activated by a position (e.g., a proximity touch, a contact touch, a backside touch, etc.) of the pointer mentioned in the foregoing description. For instance, FIG. 19B shows that the zero layer 1920 is activated as the pointer is situated on the zero layer.

### <Multi-tasking>

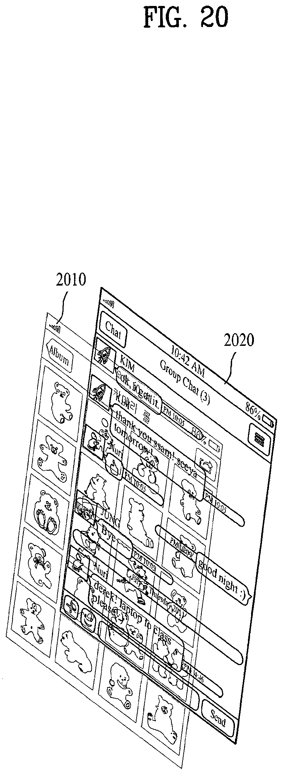

Meanwhile, a multi-layer user interface according to the present embodiment is applicable to multitasking, as shown in FIG. 20.

FIG. 20 is a diagram for one example of performing a multi-tasking via a multi-layer user interface according to another embodiment of the present invention.

Referring to FIG. 20, an image viewer application 2010 is assigned to a plus layer and a messenger application 2020 is assigned to a minus layer. As mentioned in the foregoing description, each of the applications can be activated in response to a position of a pointer. In particular, the image viewer application 2010 can be manipulated by a proximity touch via the pointer. And, the messenger application 2020 can be manipulated by a contact touch input via the touchscreen.

According to another example of the present embodiment, it may be able to secure a display space additionally in a manner of separating a submenu existing in one page from the corresponding page and then placing the separated submenu in another layer. This is described in detail with reference to FIG. 21 as follows.

FIG. 21 is a diagram for another example of a sub-menu separating method according to another embodiment of the present invention.

Referring to FIG. 21, a higher page of a messenger is displayed on a zero page [FIG. 21 (a)]. In particular, an indicator region configured to indicate various operating states of the mobile terminal and an application top end bar are displayed on a top region 2110 of the zero layer. A bottom end bar configured to display function tabs of a messenger application is displayed on a bottom region 2120 of the zero layer. And, a chat counterpart list is displayed on a middle region 2130 of the zero layer. In doing so, if a specific hardware key button is manipulated or a pointer is raised at a height to manipulate a plus layer, the plus layer 2140 is activated and the top and bottom regions move away into the plus layer 2140. As the top and bottom regions are removed from the zero layer, the middle region of the zero layer is extended so that chat counterpart items more than those of the case shown in FIG. 21 (a) can be displayed on the extended region 2130'.

Thereafter, if a specific counterpart is selected by a pressure touch from the chat counterpart items displayed on the zero layer, a minus layer is activated and a lower page containing a history of messages exchanged with the selected chat counterpart may be then displayed on the minus layer [not shown in the drawing].

According to one embodiment of the present invention, the above-described mobile terminal and controlling method thereof can be implemented in a program recorded medium as processor-readable codes. The processor-readable media include all kinds of recording devices in which data readable by a processor are saved. The processor-readable media include ROM, RAM, CD-ROM, magnetic tapes, floppy discs, optical data storage devices, and the like for example and also include carrier-wave type implementations (e.g., transmission via Internet).

The aforementioned embodiments of the mobile terminal and controlling method thereof are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A mobile terminal (100) comprising:
- a display(151) configured to display at least one selection object (1110, 1120) having a perceived three-dimensional, 3D, depth;
- a detecting unit (121, 140, 141-144) configured to detect a distance of a pointer from the mobile terminal and to detect a position of the pointer relative to the mobile terminal; and
- a controller (180) configured to:
- control a prescribed visual effect to be displayed on the display based on the detected distance and the detected position of the pointer, and
- when the distance of the pointer is determined to be equal to or less than a first threshold and the detected position of the pointer corresponds to a specific selection object, activate a function corresponding to the specific selection object;
**characterized in that** the prescribed visual effect includes displaying a shadow (1130, 1130', 1130") at a prescribed 3D depth on an extension of a straight line formed by connecting a virtual light source at a prescribed point in a 3D space with the pointer and the display, wherein when the pointer moves in a lateral direction, a shape of the shadow (1130, 1130', 1130") is changed in accordance with a contour arrangement state of the specific selection object.

2. The mobile terminal of claim 1, wherein the distance of the pointer is a distance between the pointer and the mobile terminal, and the position of the pointer includes coordinates in a plane that is parallel with a screen of the display.

3. The mobile terminal of claim 1 or 2, wherein the detecting unit includes at least one proximity sensor (140, 141-144) and a camera(121), the proximity sensor to sense a distance to the pointer, and the camera to capture an image that includes the pointer.

4. The mobile terminal of any one of claims 1 to 3, wherein the function corresponding to the specific selection object includes one selected from the group consisting of a function of providing a color to the specific selection object, a function of changing a perceived 3D depth of the specific selection object, a function of moving the displayed specific selection object and a function of activating an application corresponding to the specific selection object.

5. The mobile terminal of any one of claims 1 to 4, wherein the displayed shadow gets thicker as the detected distance of the pointer from the mobile terminal decreases, and the displayed shadow gets thinner as the detected distance of the pointer from the mobile terminal increases.

6. The mobile terminal of any one of claims 1 to 4, wherein the displayed shadow gets smaller as the detected distance of the pointer from the mobile terminal decreases, and the displayed shadow gets larger as the detected distance of the pointer from the mobile terminal increases.

7. The mobile terminal of any one of claims 1 to 4, wherein the shadow is displayed closer to the position of the pointer as the detected distance of the pointer from the mobile terminal decreases, and the shadow is displayed as being more distant from the position of the pointer as the detected distance of the pointer from the mobile terminal increases.

8. The mobile terminal of any one of claims 1 to 4, wherein when the detected position of the pointer corresponds to the specific selection object, the shadow is displayed at a same perceived 3D depth as the displayed specific selection object.

9. The mobile terminal of any one of claims 1 to 8, wherein the controller is further configured to control the prescribed visual effect by displaying a cursor of a predetermined shape, and rotating or transforming the cursor based on the detected distance of the pointer from the mobile terminal.

10. A method of controlling a mobile terminal, comprising:
- displaying, on a display, at least one selection object (1110, 1120) having a perceived three-dimensional, 3D, depth;
- detecting, via a detecting unit, a distance of a pointer from the mobile terminal and a position of the pointer relative to the mobile terminal (S610);
- controlling a prescribed visual effect to be displayed on the display based on the detected distance and the detected position of the pointer (S620); and
- when the detected distance of the pointer is equal to or less than a first threshold and the detected position of the pointer corresponds to a specific selection object (S630), activating a function corresponding to the specific selection object (S640); wherein controlling the prescribed visual effect includes displaying a shadow (1130, 1130', 1130") at a prescribed 3D depth on an extension of a straight line formed by connecting a virtual light source at a prescribed point in a 3D space with the pointer and the display, wherein when the pointer moves in a lateral direction, a shape of the shadow (1130, 1130', 1130") is changed in accordance with a contour arrangement state of the specific selection object.

11. The method of claim 10, wherein the function corresponding to the specific selection object includes one selected from the group consisting of a function of providing a color to the specific selection object, a function of changing a perceived 3D depth of the specific selection object, a function of moving the displayed specific selection object and a function of activating an application corresponding to the specific selection object.

12. The method of claim 10 or 11, wherein the displayed shadow gets smaller as the detected distance of the pointer from the mobile terminal decreases, and the displayed shadow gets larger as the detected distance of the pointer from the mobile terminal increases.

13. The method of claim 10 or 11, wherein when the detected position of the pointer corresponds to the specific selection object, the shadow is displayed at a same perceived 3D depth as the displayed specific selection object.

## Patentansprüche

1. Mobiles Endgerät (100), das Folgendes umfasst:
- eine Anzeige (151), die konfiguriert ist, mindestens ein Auswahlobjekt (1110, 1120) mit einer wahrgenommenen dreidimensionalen Tiefe, 3D-Tiefe, anzuzeigen;
- eine Detektionseinheit (121, 140, 141-144), die konfiguriert ist, einen Abstand eines Zeigers von dem mobilen Endgerät zu detektieren und eine Position des Zeigers in Bezug auf das mobile Endgerät zu detektieren; und
- eine Steuereinheit (180), die konfiguriert ist:
- einen vorgeschriebenen visuellen Effekt, der auf der Anzeige anzuzeigen ist, anhand des detektierten Abstands und der detektierten Position des Zeigers zu steuern und
- dann, wenn bestimmt wird, dass der Abstand des Zeigers gleich einem ersten Schwellenwert oder kleiner als dieser ist und die detektierte Position des Zeigers einem bestimmten Auswahlobjekt entspricht, eine Funktion zu aktivieren, die dem bestimmten Auswahlobjekt entspricht;
**dadurch gekennzeichnet, dass** der vorgeschriebene visuelle Effekt enthält, einen Schatten (1130, 1130', 1130") in einer vorgeschriebenen 3D-Tiefe auf einer Verlängerung einer geraden Linie anzuzeigen, die durch Verbinden einer virtuellen Lichtquelle an einem vorgeschriebenen Punkt in einem 3D-Raum mit dem Zeiger und der Anzeige gebildet wird, wobei dann, wenn sich der Zeiger in eine seitliche Richtung bewegt, eine Form des Schattens (1130, 1130', 1130") gemäß einem Umrissanordnungszustand des bestimmten Auswahlobjekts geändert wird.

2. Mobiles Endgerät nach Anspruch 1, wobei der Abstand des Zeigers ein Abstand zwischen dem Zeiger und dem mobilen Endgerät ist und die Position des Zeigers Koordinaten in einer Ebene enthält, die parallel zu einem Bildschirm der Anzeige ist.

3. Mobiles Endgerät nach Anspruch 1 oder 2, wobei die Detektionseinheit zumindest einen Näherungssensor (140, 141-144) und eine Kamera (121) enthält, wobei der Näherungssensor dazu dient, einen Abstand zu dem Zeiger zu erfassen, und die Kamera dazu dient, ein Bild aufzunehmen, das den Zeiger enthält.

4. Mobiles Endgerät nach einem der Ansprüche 1 bis 3, wobei die Funktion, die dem bestimmten Auswahlobjekt entspricht, eine Funktion enthält, die aus der Gruppe ausgewählt ist, die aus einer Funktion des Bereitstellens einer Farbe für das bestimmte Auswahlobjekt, einer Funktion des Änderns einer wahrgenommenen 3D-Tiefe des bestimmten Auswahlobjekts, einer Funktion des Bewegens des angezeigten bestimmten Auswahlobjekts und einer Funktion des Aktivierens einer Anwendung, die dem bestimmten Auswahlobjekt entspricht, besteht.

5. Mobiles Endgerät nach einem der Ansprüche 1 bis 4, wobei der angezeigte Schatten dicker wird, wenn der detektierte Abstand des Zeigers von dem mobilen Endgerät abnimmt, und der angezeigte Schatten dünner wird, wenn der detektierte Abstand des Zeigers von dem mobilen Endgerät zunimmt.

6. Mobiles Endgerät nach einem der Ansprüche 1 bis 4, wobei der angezeigte Schatten kleiner wird, wenn der detektierte Abstand des Zeigers von dem mobilen Endgerät abnimmt, und der angezeigte Schatten größer wird, wenn der detektierte Abstand des Zeigers von dem mobilen Endgerät zunimmt.

7. Mobiles Endgerät nach einem der Ansprüche 1 bis 4, wobei der Schatten näher an der Position des Zeigers angezeigt wird, wenn der detektierte Abstand des Zeigers von dem mobilen Endgerät abnimmt, und der Schatten als weiter entfernt von der Position des Zeigers angezeigt wird, wenn der detektierte Abstand des Zeigers von dem mobilen Endgerät zunimmt.

8. Mobiles Endgerät nach einem der Ansprüche 1 bis 4, wobei dann, wenn die detektierte Position des Zeigers dem bestimmten Auswahlobjekt entspricht, der Schatten in derselben wahrgenommenen 3D-Tiefe wie das angezeigte bestimmte Auswahlobjekt angezeigt wird.

9. Mobiles Endgerät nach einem der Ansprüche 1 bis 8, wobei die Steuereinheit ferner konfiguriert ist, den vorgeschriebenen visuellen Effekt durch Anzeigen eines Cursors einer vorgegebenen Form und Drehen oder Umwandeln des Cursor anhand des detektierten Abstands des Zeigers von dem mobilen Endgerät zu steuern.

10. Verfahren zum Steuern eines mobilen Endgeräts, das Folgendes umfasst:
- Anzeigen auf einer Anzeige mindestens eines Auswahlobjekts (1110, 1120) mit einer wahrgenommenen dreidimensionalen Tiefe, 3D-Tiefe;
- Detektieren über eine Detektionseinheit eines Abstands eines Zeigers von dem mobilen Endgerät und einer Position des Zeigers in Bezug auf das mobile Endgerät (S610);
- Steuern eines vorgeschriebenen visuellen Effekts, der auf der Anzeige anzuzeigen ist, anhand des detektierten Abstands und der detektierten Position des Zeigers (S620); und
- dann, wenn der detektierte Abstand des Zeigers gleich einem ersten Schwellenwert oder kleiner als dieser ist, und die detektierte Position des Zeigers einem bestimmten Auswahlobjekt (S630) entspricht, Aktivieren einer Funktion, die dem bestimmten Auswahlobjekt (S640) entspricht;
wobei das Steuern des vorgeschriebenen visuellen Effekts enthält, einen Schatten (1130, 1130', 1130") in einer vorgeschriebenen 3D-Tiefe auf einer Verlängerung einer geraden Linie anzuzeigen, die durch Verbinden einer virtuellen Lichtquelle an einem vorgeschriebenen Punkt in einem 3D-Raum mit dem Zeiger und der Anzeige gebildet wird, wobei dann, wenn sich der Zeiger in einer seitlichen Richtung bewegt, eine Form des Schattens (1130, 1130', 1130") gemäß einem Umrissanordnungszustand des bestimmten Auswahlobjekts geändert wird.

11. Verfahren nach Anspruch 10, wobei die Funktion, die dem bestimmten Auswahlobjekt entspricht, eine Funktion enthält, die aus der Gruppe ausgewählt ist, die aus einer Funktion des Bereitstellens einer Farbe für das bestimmte Auswahlobjekt, einer Funktion des Änderns einer wahrgenommenen 3D-Tiefe des bestimmten Auswahlobjekts, einer Funktion des Bewegens des angezeigten bestimmten Auswahlobjekts und einer Funktion des Aktivierens einer Anwendung, die dem bestimmten Auswahlobjekt entspricht, besteht.

12. Verfahren nach Anspruch 10 oder 11, wobei der angezeigte Schatten kleiner wird, wenn der detektierte Abstand des Zeigers von dem mobilen Endgerät abnimmt, und der angezeigte Schatten größer wird, wenn der detektierte Abstand des Zeigers von dem mobilen Endgerät zunimmt.

13. Verfahren nach Anspruch 10 oder 11, wobei dann, wenn die detektierte Position des Zeigers dem bestimmten Auswahlobjekt entspricht, der Schatten an derselben wahrgenommenen 3D-Tiefe wie das angezeigte Auswahlobjekt angezeigt wird.

## Revendications

1. Terminal mobile (100) comprenant :
- un affichage (151) configuré pour afficher au moins un objet de sélection (1110, 1120) ayant une profondeur tridimensionnelle, 3D, perçue ;
- une unité de détection (121, 140, 141-144) configurée pour détecter une distance d'un pointeur à partir du terminal mobile et pour détecter une position du pointeur par rapport au terminal mobile ; et
- un organe de commande (180) configuré pour :
- commander qu'un effet visuel prescrit soit affiché sur l'affichage sur la base de la distance détectée et de la position détectée du pointeur, et
- lorsqu'il est déterminé que la distance du pointeur est inférieure ou égale à un premier seuil et que la position détectée du pointeur correspond à un objet de sélection spécifique, activer une fonction correspondant à l'objet de sélection spécifique ;
**caractérisé en ce que** l'effet visuel prescrit comprend l'affichage d'une ombre (1130, 1130', 1130'') à une profondeur 3D prescrite sur une extension d'une ligne droite formée en raccordant une source lumineuse virtuelle à un point prescrit dans un espace 3D au pointeur et à l'affichage, dans lequel, lorsque le pointeur se déplace dans un sens latéral, une forme de l'ombre (1130, 1130', 1130'') est changée en fonction d'un état d'agencement de contour de l'objet de sélection spécifique.

2. Terminal mobile selon la revendication 1, dans lequel la distance du pointeur est une distance entre le pointeur et le terminal mobile, et la position du pointeur comprend des coordonnées dans un plan qui est parallèle à un écran de l'affichage.

3. Terminal mobile selon la revendication 1 ou 2, dans lequel l'unité de détection comprend au moins un capteur de proximité (140, 141-144) et une caméra (121), le capteur de proximité étant destiné à détecter une distance jusqu'au pointeur, et la caméra étant destinée à acquérir une image comprenant le pointeur.

4. Terminal mobile selon l'une quelconque des revendications 1 à 3, dans lequel la fonction correspondant à l'objet de sélection spécifique comprend l'une sélectionnée dans le groupe se composant d'une fonction de fourniture d'une couleur à l'objet de sélection spécifique, d'une fonction de changement d'une profondeur 3D perçue de l'objet de sélection spécifique, d'une fonction de déplacement de l'objet de sélection spécifique affiché et d'une fonction d'activation d'une application correspondant à l'objet de sélection spécifique.

5. Terminal mobile selon l'une quelconque des revendications 1 à 4, dans lequel l'ombre affichée devient plus épaisse au fur et à mesure que la distance détectée du pointeur à partir du terminal mobile diminue, et l'ombre affichée devient plus mince au fur et à mesure que la distance détectée du pointeur à partir du terminal mobile augmente.

6. Terminal mobile selon l'une quelconque des revendications 1 à 4, dans lequel l'ombre affichée devient plus petite au fur et à mesure que la distance détectée du pointeur à partir du terminal mobile diminue, et l'ombre affichée devient plus grande au fur et à mesure que la distance détectée du pointeur à partir du terminal mobile augmente.

7. Terminal mobile selon l'une quelconque des revendications 1 à 4, dans lequel l'ombre est affichée plus près de la position du pointeur au fur et à mesure que la distance détectée du pointeur à partir du terminal mobile diminue, et l'ombre est affichée plus loin de la position du pointeur au fur et à mesure que la distance détectée du pointeur à partir du terminal mobile augmente.

8. Terminal mobile selon l'une quelconque des revendications 1 à 4, dans lequel, lorsque la position détectée du pointeur correspond à l'objet de sélection spécifique, l'ombre est affichée à une profondeur 3D perçue identique à celle de l'objet de sélection spécifique affiché.

9. Terminal mobile selon l'une quelconque des revendications 1 à 8, dans lequel l'organe de commande est en outre configuré pour commander l'effet visuel prescrit par l'affichage d'un curseur d'une forme prédéterminée, et la rotation ou la transformation du curseur sur la base de la distance détectée du pointeur à partir du terminal mobile.

10. Procédé de commande d'un terminal mobile comprenant :
- afficher, sur un affichage, au moins un objet de sélection (1110, 1120) ayant une profondeur tridimensionnelle, 3D, perçue ;
- détecter, par l'intermédiaire d'une unité de détection, une distance d'un pointeur à partir du terminal mobile et une position du pointeur par rapport au terminal mobile (S610) ;
- commander qu'un effet visuel prescrit soit affiché sur l'affichage sur la base de la distance détectée et de la position détectée du pointeur (S620) ; et
- lorsque la distance détectée du pointeur est inférieure ou égale à un premier seuil et la position détectée du pointeur correspond à un objet de sélection spécifique (S630), activer une fonction correspondant à l'objet de sélection spécifique (S640) ;
dans lequel la commande de l'effet visuel prescrit comprend l'affichage d'une ombre (1130, 1130', 1130") à une profondeur 3D prescrite sur une extension d'une ligne droite formée en raccordant une source lumineuse virtuelle à un point prescrit dans un espace 3D au pointeur et à l'affichage, dans lequel, lorsque le pointeur se déplace dans un sens latéral, une forme de l'ombre (1130, 1130', 1130'') est changée en fonction d'un état d'agencement de contour de l'objet de sélection spécifique.

11. Procédé selon la revendication 10, dans lequel la fonction correspondant à l'objet de sélection spécifique comprend l'une sélectionnée dans le groupe se composant d'une fonction de fourniture d'une couleur à l'objet de sélection spécifique, d'une fonction de changement d'une profondeur 3D perçue de l'objet de sélection spécifique, d'une fonction de déplacement de l'objet de sélection spécifique affiché et d'une fonction d'activation d'une application correspondant à l'objet de sélection spécifique.

12. Procédé selon la revendication 10 ou 11, dans lequel l'ombre affichée devient plus petite au fur et à mesure que la distance détectée du pointeur à partir du terminal mobile diminue, et l'ombre affichée devient plus grande au fur et à mesure que la distance détectée du pointeur à partir du terminal mobile augmente.

13. Procédé selon la revendication 10 ou 11, dans lequel, lorsque la position détectée du pointeur correspond à l'objet de sélection spécifique, l'ombre est affichée à une profondeur 3D perçue identique à celle de l'objet de sélection spécifique affiché.
